# NEUE EUROPÄISCHE PATENTSCHRIFT

(11) **EP 2 366 321 B2**
(45) Veröffentlichungstag und Bekanntmachung des Hinweises auf die Entscheidung über den Einspruch: **22.12.2021**
(45) Hinweis auf die Patenterteilung: 05.03.2014
(21) Anmeldenummer: 10163463.2
(22) Anmeldetag: 20.05.2010
(51) Int. Cl.: A47L 9/14, B01D 46/52

(54) **Staubsaugerfilterbeutel**
Vacuum cleaner filter bag
Sac d'aspirateur

(30) Priorität: 19.03.2010 EP 10002964
(43) Veröffentlichungstag der Anmeldung: 21.09.2011
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- EP-A1- 0 338 479
- EP-A1- 1 683 460
- EP-A1- 2 098 153
- EP-B1- 1 091 795
- WO-A1-00/00269
- WO-A1-00/64320
- WO-A1-95/16383
- WO-A1-2006/025249
- DE-A1- 4 227 744
- DE-A1- 10 064 608
- DE-U1- 20 101 466
- DE-U1- 29 704 079
- DE-U1-202005 021 300
- GB-A- 879 188
- JP-A- H08 103 404
- JP-A- 2001 204 661
- US-A- 3 107 989
- US-A1- 2008 257 149

## Beschreibung

### Gebiet der Erfindung

Die Erfindung betrifft einen Staubsaugerfilterbeutel mit einer ersten ein Filtermaterial umfassenden Beutelwand und einer zweiten ein Filtermaterial umfassenden Beutelwand, wobei die erste und die zweite Beutelwand entlang ihres Umfangs derart miteinander verbunden sind, dass der Staubsaugerfilterbeutel vollständig geschlossen ist, wobei das Filtermaterial der ersten und der zweiten Beutelwand aus Vliesstoff gebildet ist und wobei der Staubsaugerfilterbeutel eine Eintrittsöffnung, durch die zu reinigende Luft in den Staubsaugerfilterbeutel einströmen kann, und eine Halteplatte aufweist.

### Stand der Technik

Staubsaugerfilterbeutel werden heutzutage vorwiegend aus Vliesstoffen gefertigt. Aufgrund ihrer hervorragenden Staubspeicherfähigkeit haben Staubsaugerfilterbeutel aus Vliesstoffen Filterbeutel aus Papier, wie sie beispielsweise aus der US 3,596,443 bekannt sind, fast völlig verdrängt. Die Herstellung der Filterbeutel aus Vliesstoffen unterscheidet sich grundlegend von der Herstellung von Papierbeuteln. Daher sind Herstellungsverfahren und Merkmale von Filterbeuteln aus Papier im Allgemeinen nicht auf Filterbeutel aus Vliesstoffen übertragbar.

Für Staubsaugerfilterbeutel aus Vliesstoffen sind sogenannte Flachbeutel am gebräuchlichsten. Diese sind aus einer ersten oder oberen und einer zweiten oder unteren Beutelwand gebildet. Beide Beutelwände können dabei entlang ihres Umfangs durch einen Saum miteinander verschweißt und/oder verklebt sein. Im Fall eines rechteckigen Flachbeutels bilden dann vier Schweiß- und/oder Klebenähte die Verbindung zwischen der ersten und der zweiten Beutelwand. Der Saum kann auch teilweise durch bloßes Falten eines Stücks Filtermaterial gebildet sein. So können beispielsweise die obere und die untere Beutelwand dadurch ausgebildet werden, dass ein einziges Stück Filtermaterial entlang einer Symmetrieachse desselben gefaltet wird und die beiden Beutelwände entlang der nach dem Falten noch offenen Kanten verschweißt und/oder verklebt werden. In einem solchen Flachbeutel sind die erste und die zweite Beutelwand durch drei Schweiß- und/oder Klebenähte und eine Falte verbunden. Alternativ hierzu kann aus einem Stück Filtermaterial durch eine sogenannte Längsschweiß- und/oder Längsklebenaht zuerst ein Schlauch geformt werden, der senkrecht zu dieser Schweiß- und/oder Klebenaht durch zwei weitere Schweiß-und/oder Klebenähte geschlossen wird. In diesem Fall werden die erste und die zweite Beutelwand durch zwei Schweiß- und/oder Klebenähte und zwei Falten verbunden. Die Längsschweiß- und/oder Längsklebenaht kann hierbei beliebig entweder in der ersten oder in der zweiten Beutelwand liegen (ein Sonderfall dieser Ausgestaltung wäre, dass die Längsschweiß- und/oder Längsklebenaht so liegt, dass sie die erste und die zweite Beutelwand verbindet; dies entspräche dann dem zuvor beschriebenen Fall, in dem die erste und die zweite Beutelwand durch drei Schweiß- und/oder Klebenähte und einer Falte verbunden sind).

Derartige Flachbeutel sind, obwohl Vliesmaterial im Vergleich zu Papier an sich wesentlich schwieriger zu verarbeiten ist, auf relativ einfache Art und Weise herstellbar. Flachbeutel sind beispielsweise aus der DE 201 01 466, der EP 0 161 790, der EP 0 639 061, der EP 1 059 056 oder der EP 1 661 500 bekannt. Ein solcher Flachbeutel ist Gegenstand der Präambel des Patentanspruchs 1. Nachteilig an diesen einfachen Flachbeuteln ist, dass sich dieser Beuteltyp nur unzureichend an den im Staubsauger zur Verfügung stehenden Bauraum anpassen kann.

Um eine bessere Anpassung an den Bauraum zu erreichen werden Flachbeutel mit Seitenfaltungen eingesetzt. Diese Seitenfaltungen können auch ausstülpbar gestaltet sein.

Der Begriff Faltung wird im Sinn der vorliegenden Erfindung als eine Abfolge von zwei oder mehreren Falten definiert, wobei eine einzelne Falte im Sinn der vorliegenden Erfindung jeweils durch zwei Faltenschenkel und ein Faltenscharnier definiert ist.

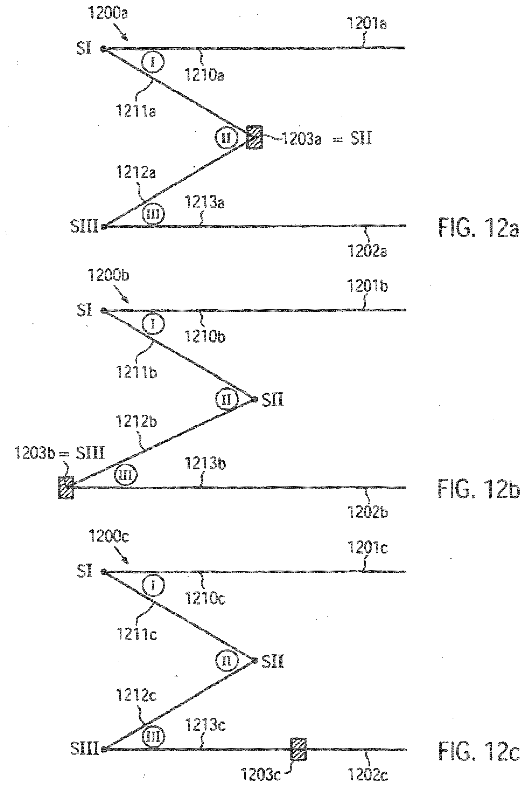

In den Figuren 12a, 12b und 12c ist gezeigt, wie gemäß dem Stand der Technik Seitenfaltungen ausgebildet sind.

Figur 12a zeigt eine Seitenfaltung 1200a, wie sie in der EP 1 683 460 offenbart ist. Der Staubsaugerfilterbeutel gemäß Figur 12a besteht aus einer ersten oder oberen Beutelwand 1201 a und einer zweiten oder unteren Beutelwand 1202a. Diese beiden Beutelwände sind durch eine Schweißnaht 1203a miteinander verbunden. Zur Ausbildung der Seitenfaltung sind drei Falten I, II und III vorgesehen. Beide Faltenschenkel der Falte I 1210a und 1211a werden durch die erste Beutelwand gebildet und das Faltenscharnier SI der Falte I liegt in der ersten Beutelwand. Beide Faltenschenkel der Falte III 1212a und 1213a werden durch die zweite Beutelwand gebildet und das Faltenscharnier SIII der Falte III liegt in der zweiten Beutelwand. Der erste Faltenschenkel der Falte II 1211a wird durch die erste Beutelwand gebildet (und entspricht dem zweiten Faltenschenkel der Falte I). Der zweite Faltenschenkel der Falte II 1212a wird durch die zweite Beutelwand gebildet (und entspricht dem ersten Faltenschenkel der Falte III). Das Faltenscharnier SII der Falte II läuft entlang der Schweißnaht 1203a.

Figur 12b zeigt eine Seitenfaltung 1200b gemäß der DE 10 2008 006 769. Der Staubsaugerfilterbeutel gemäß Figur 12b besteht aus einer ersten oder oberen Beutelwand 1201 b und einer zweiten oder unteren Beutelwand 1202b. Zur Ausbildung der Seitenfaltung sind drei Falten I, II und III vorgesehen. Beide Faltenschenkel der Falte I 1210b und 1211b werden durch die erste Beutelwand gebildet und das Faltenscharnier SI der Falte I liegt in der ersten Beutelwand. Beide Faltenschenkel der Falte III 1212b und 1213b werden durch die zweite Beutelwand gebildet und das Faltenscharnier SIII der Falte III verläuft entlang der Schweißnaht 1203b. Die Verbindung zwischen der ersten oder oberen Beutelwand des Staubsaugerfilterbeutels und der zweiten oder unteren Beutelwand des Staubsaugerfilterbeutels wird in der gezeigten Ausführung durch eine Falte realisiert, nämlich die Falte II mit ihrem ersten Faltenschenkel 1211 b (der dem zweiten Faltenschenkel der Falte I entspricht) und ihrem zweiten Faltenschenkel 1212b (der dem ersten Faltenschenkel der Falte III entspricht).

In Figur 12c ist eine weitere Alternative zur Ausbildung einer Seitenfalte 1200c gemäß dem Stand der Technik gezeigt. Der Staubsaugerfilterbeutel gemäß Figur 12c besteht ebenfalls einer ersten oder oberen Beutelwand 1201 c und einer zweiten oder unteren Beutelwand 1202c. Zur Ausbildung der Seitenfaltung sind ebenfalls drei Falten I, II und III vorgesehen. Beide Faltenschenkel der Falte I 1210c und 1211 c werden durch die obere Beutelwand gebildet und das Faltenscharnier SI der Falte I liegt in der oberen Beutelwand. Beide Faltenschenkel der Falte III 1212c und 1213c werden durch die untere Beutelwand gebildet und das Faltenscharnier SIII der Falte III liegt in der unteren Beutelwand. Der erste Faltenschenkel der Falte II 1211 c wird durch die obere Beutelwand gebildet (und entspricht dem zweiten Faltenschenkel der Falte I). Der zweite Faltenschenkel der Falte II 1212c wird durch die untere Beutelwand gebildet (und entspricht dem ersten Faltenschenkel der Falte III). Die Faltenschenkel der Falte II und damit die obere und die untere Beutelwand sind durch das Faltenscharnier SII mit einander verbunden. Die Schweißnaht 1203a liegt in der unteren Beutelwand.

Die WO 2006/025249 zeigt einen Filterbeutel mit mehreren Seitenfaltungen.

Damit sich Flachbeutel effizient mit Staub füllen können, müssen sie aus flexiblem Filtermaterial gefertigt sein. Denn ist das Filtermaterial zu steif, dann kann sich der Beutel während des Gebrauchs nicht entfalten und kein ausreichendes Volumen für den aufzunehmenden Staub zur Verfügung stellen. Falls der Staubsaugerfilterbeutel eine Seitenfalte haben soll, muss die Flexibilität des Filtermaterials darüber hinaus gegeben sein, damit eine solche Seitenfalte überhaupt vorgesehen werden kann und sich während des Gebrauchs auch wieder entfalten kann.

Ferner wird durch die Flexibilität des Filtermaterials auch die Verpackung derartiger Staubsaugerfilterbeutel erleichtert. So können Staubsaugerfilterbeutel von verschiedener Größe (für verschieden Staubsaugermodelle) so zusammen gefaltet werden, dass sie trotz ihrer verschiedenen Abmessungen in Verpackungen mit denselben Abmessungen angeboten werden können, was zu erheblichen Vorteilen für die Lagerhaltung und das Anbieten im Verkaufsraum führt.

Zur Verbesserung der Staubspeicherfähigkeit von Filterbeuteln wurden verschiedene Maßnahmen vorgeschlagen. Aus der EP 0 960 645 sind mehrlagige Filtermedien aus Vliesstoffen bekannt. Eine Vorfiltration durch lose Fasern wird beispielsweise in der DE 10 2007 060 747, der DE 20 2007 010 692 und der WO 2005/060807 offenbart. Eine Vorabscheidung durch einen Filterbeutel im Filterbeutel wurde durch die WO 2010/000453, die DE 20 2009 002 970 und die DE 20 2006 016 303 offenbart. Strömungsumlenkungen oder Strömungsverteilungen im Filterbeutel werden beispielsweise durch die EP 1 915 938, die DE 20 2008 016 300, die DE 20 2008 007 717, die DE 20 2006 019 108, die DE 20 2006 016 304, die EP 1 787 560 und die EP 1 804 635 vorgeschlagen. Die DE 10 2007 060 748 offenbart einen Filterbeutel, bei dem das Vliesmaterial zur Ausbildung einer dreidimensional geformten Beutelwand verstreckt wird. Die EP 1 982 625 offenbart einen Filterbeutel, wobei das Filtermaterial zumindest bereichsweise verprägt ist und durch eine Profilierung des Filtermaterials die wirksame Filterfläche vergrößert wird. Die Profilierung kann in Form von länglichen parallel zueinander angeordneten Rippen ausgeführt sein. Durch das Einprägen eines derartigen Musters werden die Materialeigenschaften und/oder die Filtrationseigenschaften der verprägten Vliesstofflage verändert. Die DE 20 2005 010 357 offenbart einen Staubsaugerfilterbeutel, wobei die Beutelwand mindestens eine Lage aus Filtermaterial aufweist, wobei mindestens eine Lage aus gekrepptem Fasermaterial besteht. Dabei können eine Grobfilterlage, eine Feinfilterlage oder alle Lagen des Beutels gekreppt sein. Durch das Kreppen wird die wenigstens eine Lage unregelmäßig zerknittert, wobei das Volumen pro Flächeneinheit der betreffenden Filterlage vergrößert wird. Durch ein solches Kreppen wird das Flächengewicht der Filterlage und damit deren Filtrationseigenschaften verändert.

Nachteilig an den zuvor beschriebenen Staubsaugerfilterbeuteln ist jedoch, dass der Volumenstrom an zu reinigender Luft, der durch den Staubsauger gefördert wird, bei steigendem Füllgrad des Staubsaugerfilterbeutels immer noch beträchtlich abnimmt. Die Staubaufnahme, also die Reinigungswirkung, eines Staubsaugers ist bei einem teilgefüllten Staubsaugerbeutel also wesentlich geringer als bei einem entsprechenden leeren Beutel. Diese Abnahme der Saugleistung ist bei Filterbeuteln mit einem hohen Abscheidegrad (hohe Partikelrückhaltung oder geringe Penetration) besonders stark.

Aufgabe der vorliegenden Erfindung ist es daher, einen Staubsaugerfilterbeutel bereitzustellen, durch den der Volumenstrom an zu reinigender Luft, der durch den Staubsauger gefördert wird, bei steigendem Füllgrad des Staubsaugerfilterbeutels geringfügiger als bei einem Staubsaugerbeutel gemäß dem Stand der Technik abnimmt.

### Allgemeine Beschreibung der Erfindung

Die Erfindung stellt einen Staubsaugerfilterbeutel nach Patentanspruch 1 bereit, mit einer ersten ein Filtermaterial umfassenden Beutelwand und einer zweiten ein Filtermaterial umfassenden Beutelwand, wobei die erste und die zweite Beutelwand entlang ihres Umfangs derart miteinander verbunden sind, dass der Staubsaugerfilterbeutel vollständig geschlossen ist, wobei das Filtermaterial der ersten und der zweiten Beutelwand aus Vliesstoff gebildet ist, wobei der Staubsaugerfilterbeutel eine Eintrittsöffnung, durch die zu reinigende Luft in den Staubsaugerfilterbeutel einströmen kann, eine Halteplatte aufweist, und in welchem die erste und/oder die zweite Beutelwand wenigstens fünf Falten aufweist. Gemäß der vorliegenden Erfindung ist eine Fixiervorrichtung vorgesehen, die verhindert, dass sich wenigstens eine der wenigstens fünf Falten vollständig entfaltet.

Durch die wenigstens fünf Falten können auf der Oberfläche der ersten und/oder zweiten Beutelwand Oberflächenfaltungen vorgesehen werden. Die Oberflächenfaltung des Filtermediums hat erhebliche Vorteile. Aufgrund der Oberflächenfaltung ist die durchströmte Fläche wesentlich größer als die reguläre für die Durchströmung zur Verfügung stehende Fläche (Anströmfläche). Dies kann mehrere positive Auswirkungen haben.

Die Standzeit des Filters wird proportional zur Flächenvergrößerung verlängert, da mehr Filtermaterial zur Verfügung steht, in das Staub eingelagert werden kann. Dabei ist die Standzeit definiert als die Zeit, nach der ein vorgegebener Filterwiderstand (Druckverlust) erreicht wird. Die Erhöhung des Druckverlustes macht sich beim Staubsauger als Reduzierung des Volumenstroms (Saugluftstrom) und letztlich als Verlust an Reinigungswirkung bemerkbar.

Die Geschwindigkeit, mit der das Filtermedium durchströmt wird (nachfolgend Mediendurchtrittsgeschwindigkeit genannt) sinkt. Bei einem Flachbeutel nach dem Stand der Technik mit einer Fläche von 2 x 300 mm x 320 mm und einem Volumenstrom von 35 l/s ergibt sich eine Mediendurchtrittsgeschwindigkeit (Verhältnis von Volumenstrom zu durchströmter Fläche des Flachbeutels) von 18,2 cm/s. Bei einer Materialdicke von 3,4 mm wird die Beutelwand also in ca. 0,019 s durchströmt. Ein mit Falten versehener Beutel gemäß der Erfindung mit vergleichbaren Außenabmessungen kann beispielsweise eine Filterfläche von 2 x 300 mm x 630 mm haben. Bei einem Volumenstrom von 35 1/s ergibt sich nun eine Mediendurchtrittsgeschwindigkeit von 9,3 cm/s und eine Durchströmzeit von 0,034 s. Die geringere Mediendurchtrittsgeschwindigkeit hat einen geringeren Druckabfall über dem Filtermedium zur Folge, d.h. der Anfangsvolumenstrom (ohne Staubbeladung des Filterbeutels) ist höher als bei einem Filterbeutel ohne die erfinderische Faltung. Anders gesagt wird die Aufnahmeleistung des Staubsaugermotors effektiver in einen hohen Saugluftstrom umgesetzt. Bei gleicher Reinigungsleistung kann so ein Staubsaugermotor mit geringerer Leistungsaufnahme verwendet werden.

Die durch die geringere Mediendurchschnittsgeschwindigkeit bedingte höhere Verweilzeit der Partikel im Filter führt zu einer höheren Wahrscheinlichkeit von Partikel/Faser Kontakten. Verwendet man auch noch ein elektrostatisch geladenes Filtermedium, in welchem die Partikel stabil auf den Stapelfasern oder Filamenten haften bleiben, führt eine Verringerung der Mediendurchtrittsgeschwindigkeit zu einer überproportional besseren Partikelabscheidung.

Wie bereits eingangs erläutert, umfasst jede Falte, so wie der Begriff im Zusammenhang mit der vorliegenden Erfindung verwendet wird, zwei Faltenschenkel und ein Faltenscharnier.

Unter einem Faltenscharnier wird der Punkt einer Falte mit dem geringsten Krümmungsradius verstanden. Durch die gedachte Verbindung der Faltenscharniere wird eine sogenannte Faltenachse erhalten. Die Faltenachse wird auch als Faltenrücken bezeichnet. Die Faltenachse kann der Längsachse einer Falte entsprechen.

Bereiche einer Falte mit einem Krümmungsradius, der größer ist als der minimale Krümmungsradius der Falte, werden als Faltenschenkel bezeichnet. Der zwischen den Faltenschenkeln einer Falte liegende Bereich wird als Faltenkern bezeichnet.

Die Faltenschenkel einer Falte können also insbesondere auch eine Krümmung aufweisen.

Falten können auch Wendepunkte aufweisen. Wendepunkte sind jene Stellen einer Falte, insbesondere der Faltenschenkel, an welchen sich die Krümmung der Falte von konkav zu konvex ändert. Eine Verbindungslinie, die mehrere Wendepunkte einer Falte verbindet, wird als Inflexionslinie (Wendelinie) bezeichnet.

Zwei benachbarte Falten können sich auch einen Faltenschenkel teilen. Sind mehrere Falten derartig vorgesehen, können ein Faltenpaket oder ein Faltenzug realisiert werden.

Mehrere Falten können auch zickzackförmig angeordnet sein.

Die Abfolge mehrerer Falten wird im Zusammenhang mit der vorliegenden Erfindung als Faltung bezeichnet.

Faltungen können auch Schenkel haben, die parallel zur Beutelwand verlaufen. Solche Schenkel können zwischen Falten, die aus der Beutelwandebene herausstehen und somit in Bezug auf die Beutelwand eine anströmseitige Öffnung aufweisen, liegen. Insbesondere kann dabei die Breite des parallelen Schenkels geringer als die, vorzugsweise geringer als die Hälfte der oder höchstvorzugsweise geringer als ein Viertel der, Breite der Öffnung der aus der Beutelwand herausstehenden Falte sein.

Die Faltenschenkel der Falten der ersten und/oder zweiten Beutelwand können insbesondere glatt sein. Unter "glatt" wird hierbei verstanden, dass die Faltenschenkel keine Verdichtungen und/oder Strukturierungen aufweisen, insbesondere die die Form der Falten stabilisieren sollen.

Ein oder mehrere Faltenschenkel einer oder mehrerer Falten der ersten und/oder zweiten Beutelwand können eine oder mehrere Prägestrukturen umfassen, insbesondere wobei die Prägestrukturen nicht zum Stabilisieren der Form der Falten dienen. Dadurch kann eine weitere Vergrößerung der zur Filtration zur Verfügung stehenden Fläche erreicht werden.

Die erste und/oder die zweite Beutelwand können insbesondere mehr als 5, 10, 20, 30, 40 oder 50 Falten, insbesondere auch Faltungen dieser Falten, aufweisen.

Die Falten der ersten und/oder zweiten Beutelwand können einen im Wesentlichen regelmäßigen Abstand zueinander aufweisen. Mit anderen Worten kann der Abstand zwischen den Faltenrücken je zweier benachbarter Falten im Wesentlichen konstant sein.

Faltungen können liegend oder stehend ausgebildet sein. Unter liegenden Faltungen sind Faltungen zu verstehen, deren Faltenschenkel im Wesentlichen parallel zur Beutelwand angeordnet sind. Unter stehenden Faltungen sind Faltungen zu verstehen, deren Faltenschenkel mit der Beutelwand einen Winkel größer 0° und kleiner 180°, insbesondere größer 20°oder größer 45°, einschließen.

Unter einer stehenden Faltung wird auch eine Faltung verstanden, bei der eine Ebene, in der sowohl die Faltenachse als auch die Wendelinie der Falte liegt, mit einer ebenen, horizontalen Fläche, auf die erste und/oder zweite Beutelwand angeordnet wird, einen Winkel größer als 45°, insbesondere größer als 30°, insbesondere größer als 10° einschließt. Unter einer liegenden Faltung kann in diesem Fall eine Faltung verstanden werden, bei der die Ebene mit dieser Fläche einen Winkel kleiner als 45°, insbesondere kleiner als 30°, insbesondere kleiner als 10°, einschließt.

Zum Messen oder Bestimmen der oben genannten Winkel wird der Staubsaugerfilterbeutel, insbesondere das gefaltete Vliesstoffmaterial auf einer ebenen, horizontalen Fläche angeordnet. Dazu kann der Staubsaugerfilterbeutel auch aufgeschnitten werden und, insbesondere derart auf der Fläche angeordnet werden, dass die Anströmseite oder Innenseite des ursprünglichen Staubsaugerfilterbeutels auf der Fläche aufliegt.

Liegende Faltungen können sich gegenseitig überlappend, nicht überlappend und/oder teilweise überlappend ausgebildet sein.

Das gefaltete Vliesstoffmaterial kann eine oder mehrere Schichten aus Vliesstoffmaterial umfassen. Mehrere Schichten aus Vliesstoffmaterial können insbesondere gemeinsam gefaltet sein. Die Beutelwand kann insbesondere auch ein Laminat aus mehreren Schichten, insbesondere zwei oder mehr Schichten, umfassen oder aus einem solchen bestehen.

Beispielsweise kann das Laminat ein Filamentspinnvliesstoff (Spunbond) - schmelzgesponnener Mikrofaserspinnvliesstoff (Meltblownvliesstoff) - Filamentspinnvliesstoff (Spunbond) Laminat (SMS-Laminat) sein. Auch können zwei oder mehr Meltblownvlieslagen verwendet werden (SMMS-Laminat, SnxMS-Laminat).

Prinzipiell kann die Beutelwand geprägtes Vliesstoffmaterial umfassen.

Die Halteplatte wird hier allgemein als ein Element des Staubsaugerfilterbeutels angesehen, das der Halterung des Staubsaugerfilterbeutels im Inneren eines Staubsaugergehäuses dient. Die Halteplatte kann insbesondere mit der Beutelwand des Staubsaugerfilterbeutels verbunden sein und im Bereich einer Einströmöffnung angeordnet sein. Es kann vorteilhaft sein die Faltungen aufweisende Beutelwand in einem ersten Schritt zu verdichten, beispielsweise durch Ultraschallverschweißung, und in einem zweiten Schritt die Halteplatte aufzuschweißen. Zur Halterung des Staubsaugerfilterbeutels in einem Staubsauger wird die Halteplatte mit einem entsprechenden Halterungselement des Staubsaugers verbunden, insbesondere in Eingriff gebracht.

Die Halteplatte kann grundsätzlich eine beliebige Form aufweisen. Beispielsweise kann die Halteplatte als ebenes, flächiges Bauteil wie in der EP 1 849 392 gezeigt, ausgebildet sein. Die Halteplatte kann auch eine komplexere Struktur, wie etwa in der DE 20 2008 006 904 gezeigt, aufweisen.

Die Einströmöffnung und die Halteplatte können beliebig auf der Oberfläche der Beutelwand des Staubsaugerfilterbeutels positioniert werden. Beispielsweise können die Einströmöffnung und die Halteplatte zentriert auf dem Staubsaugerfilterbeutel angeordnet werden.

Gemäß einer bevorzugten Weiterbildung der Erfindung haben die Faltenschenkel der wenigstens fünf Falten Inflexionslinien, die im Wesentlichen gerade verlaufen.

Im Gegensatz zu einer gekrümmten Inflexionslinie, die dazu führt, dass die Falte stabilisiert wird, bleibt durch eine im Wesentlichen gerade Inflexionslinie die Falte unversteift. Mit anderen Worten können die Faltenschenkel derart ausgebildet sein, dass sie nicht in ihrer Form stabilisiert werden. Dadurch bleibt der Staubsaugerfilterbeutel flexibel und die Falten können sich besser an den Bauraum eines Staubsaugers anpassen.

Gemäß einer anderen bevorzugten Weiterbildung der zuvor beschriebenen Ausführungsformen des erfindungsgemäßen Staubsaugerfilterbeutels bilden die wenigstens fünf Falten wenigstens eine Oberflächenfaltung, wobei die maximale Höhe der Oberflächenfaltung vor der ersten Inbetriebnahme des Staubsaugerfilterbeutels in einem Staubsauger kleiner ist als die der maximalen Höhe entsprechende maximale Breite der Oberflächenfaltung. Wie die Begriffe maximale Höhe und maximale Breite hierbei zu messen sind, wird untenstehend noch im Detail erläutert.

Vorteil der zuvor beschriebenen Weiterbildung ist es, dass trotz einer Vergrößerung der Oberfläche der ersten und/oder zweiten Beutelwand diese Beutelwände immer noch hinreichend flexibel bleiben, sodass sich der Staubsaugerbeutel optimal an den Bauraum im Staubsauger anpassen kann.

Gemäß einer anderen bevorzugten Weiterbildung kann kumulativ oder alternativ zur zuvor beschriebenen Weiterbildung auch ein Staubsaugerfilterbeutel vorgesehen werden, in welchem vor der ersten Inbetriebnahme des Staubsaugerfilterbeutels in einem Staubsauger jede der wenigstens fünf Falten eine Länge hat, die größer als ein Drittel der Gesamtausdehnung des Staubsaugerfilterbeutels in Richtung der Falte ist, vorzugsweise größer als die Hälfte der Gesamtausdehnung des Staubsaugerfilterbeutels in Richtung der Falte ist und höchstvorzugsweise der Gesamtausdehnung des Beutels in Richtung der Falte entspricht. So können die Falten, also insbesondere die Faltenachsen, des Vliesstoffmaterials von einer ersten durch die Kante oder den Saum gebildeten Seite des Staubsaugerfilterbeutels zu einer zweiten, der ersten Seite gegenüberliegenden, durch die Kante oder den Saum gebildeten Seite des Staubsaugerfilterbeutels, verlaufen. Eine Kante oder ein Saum des Staubsaugerfilterbeutels kann hierbei insbesondere durch eine Schweißnaht gebildet werden. Die Falten, insbesondere Faltenachsen, des Vliesstoffmaterials, können hierbei geradlinig ausgebildet sein.

Die Faltenachsen der Falten können auch insbesondere derart ausgebildet sein, dass sie keinen Bereich aufweisen, in dem das Vliesstoffmaterial verschmolzen, verschweißt oder in irgendeiner Form plastifiziert ist, insbesondere dass sie nicht durch eine Schweißnaht gebildet werden.

Durch diese Weiterbildung wird ebenfalls ein sehr flexibler Staubsaugerfilterbeutel erhalten, der sich optimal an den Bauraum im Staubsauger anpassen kann.

Gemäß einer anderen Weiterbildung der Erfindung können die Falten der ersten und/oder zweiten Beutelwand eine Faltenhöhe zwischen 3 mm und 100 mm, insbesondere zwischen 3 mm und 50 mm, insbesondere zwischen 5 mm und 15 mm, aufweisen. Die Faltenhöhe kann auch größer als 100 mm sein. Dies kann insbesondere bei großen (Volumen von mehr als 10 Liter), insbesondere gewerblich genutzten, Staubsaugerfilterbeuteln der Fall sein.

Die Falten der ersten und/oder zweiten Beutelwand können außerdem eine Faltenbreite zwischen 3 mm und 100 mm, insbesondere zwischen 3 mm und 50 mm, insbesondere zwischen 5 mm und 15 mm, aufweisen. Die Faltenbreite kann auch größer als 100 mm sein. Dies kann insbesondere bei großen (Volumen von mehr als 10 Liter), insbesondere gewerblich genutzten, Staubsaugerfilterbeuteln der Fall sein.

Wenigstens zwei Falten der ersten und/oder zweiten Beutelwand können eine voneinander unterschiedliche Faltenhöhe und/oder Faltenbreite und/oder Faltenform aufweisen. Alternativ können mehrere oder alle Falten der ersten und/oder zweiten Beutelwand gleiche Faltenhöhen und/oder Faltenbreiten aufweisen.

Eine andere Weiterbildung der Erfindung sieht vor, dass eine Mehrzahl von Falten vorgesehen ist, die über die erste und/oder zweite Beutelwand, vorzugsweise im Wesentlichen gleichmäßig, verteilt sind.

Hierdurch lässt sich eine maximale Erhöhung der Oberfläche des Filtermaterials der ersten und/oder zweiten Beutelwand durch Oberflächenfaltungen realisieren.

Der Staubsaugerfilterbeutel kann zusätzlich zu der Oberflächenfaltung auf der ersten und/oder zweiten Beutelwand auch eine Seitenfaltung umfassen.

Eine besonders bevorzugte Seitenfaltung ergibt sich, wenn die Beutelwandbereiche, aus denen diese Seitenfaltung gebildet wird, ebenfalls Falten aufweist, die vorzugsweise in einem Winkel größer als 45°, höchst vorzugsweise in einem im Wesentlichen rechten Winkel, zur Seitenfaltung verlaufen.

Neben einer zusätzlichen Erhöhung der Oberfläche des Filtermaterials im Bereich der Seitenfaltung ist diese Weiterbildung auch produktionstechnisch einfacher zu realisieren. So kann das gesamte Filtermaterial mit Falten beziehungsweise Faltungen versehen werden, ohne dass die Bereiche, aus denen die Seitenfaltung gebildet werden soll, hiervon ausgenommen werden müssen.

Die Falten und Faltungen der ersten und/oder zweiten Beutelwand können eine beliebige Form aufweisen. Insbesondere können die Faltenschenkel auch gekrümmt sein.

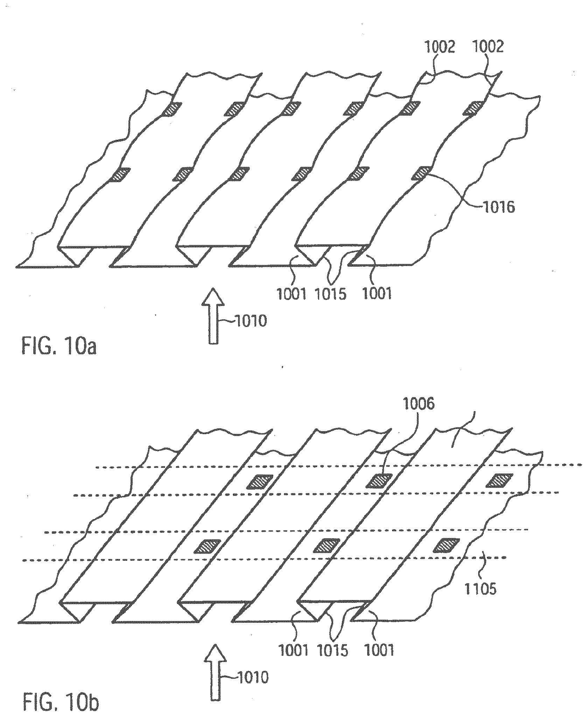

Eine bevorzugte Faltung stellt die sogenannte Schwalbenschwanzfaltung dar. Unter einer Faltung mit Schwalbenschwanzform soll insbesondere eine Abfolge von vier Falten mit der folgenden Konfiguration verstanden werden. Der erste Schenkel der ersten Falte und der zweite Schenkel der vierten Falten verlaufen parallel zur Beutelwand, ebenso verläuft der zweite Schenkel der zweiten Falte, welcher identisch mit dem ersten Schenkel der dritten Falte ist, parallel zur Beutelwand. Der zweite Schenkel der ersten Falte ist identisch mit dem ersten Schenkel der zweiten Falte und der zweite Schenkel der dritten Falte ist identisch mit dem ersten Schenkel der vierten Falte. Eine derartige Faltung wird untenstehend noch im Zusammenhang mit Figur 10 im Detail beschrieben.

Die Falten oder Faltungen der ersten und/oder zweiten Beutelwand können jeweils unterschiedlich lange Faltenschenkel umfassen. Eine Kante, an der die Faltenschenkel zusammentreffen, insbesondere die Faltenachse, kann durch eine Falzlinie gebildet werden.

Als Materialien für die Beutelwand, insbesondere für das gefaltete Vliesstoffmaterial, kommen prinzipiell alle für die Herstellung von Staubsaugerfilterbeuteln bekannten Materialen in Betracht.

Als Vliesstoffmaterial kann ein trocken- oder nassgelegter Vliesstoff oder ein Extrusionsvliesstoff, insbesondere ein schmelzgesponnener Mikrofaserspinnvliesstoff (Meltblownvliesstoff) oder Filamentspinnvliesstoff (Spunbond) verwendet werden. Es können auch zusätzlich Nanofaserlagen vorhanden sein. Die Abgrenzung zwischen nassgelegtem Vliesstoffen beziehungsweise Nonwovens und herkömmlichen nassgelegtem Papier erfolgt gemäß der unten genannten Definition, wie sie auch von der International Association Serving the Nonwovens and related Industries (EDANA) verwendet wird. Ein herkömmlich bekanntes (Filter-) Papier ist also kein Vliesstoff.

Der Vliesstoff kann Stapelfasern oder Endlosfasern umfassen. Fertigungstechnisch können auch mehrere Schichten an Stapelfasern oder Endlosfasern vorgesehen werden, die zu genau einer Schicht Vliesstoff verfestigt werden.

Beispielsweise kann die Beutelwand, insbesondere das gefaltete Vliesstoffmaterial, ein Laminat aus Filamentspinnvliesstoff und Meltblownvliesstoff (SMS, SMMS oder SnxMS) umfassen. Dieses Laminat kann mittels eines Heißklebers laminiert oder kalandriert sein. Die Schicht aus Meltblownvliesstoff kann gekreppt sein.

Der Begriff Vliesstoff ("Nonwoven") wird gemäß der Definition nach ISO-Standard ISO 9092: 1988 beziehungsweise CEN-Standard EN29092 verwendet. Insbesondere sind die Begriffe Faservlies oder Vlies und Vliesstoff auf dem Gebiet der Herstellung von Vliesstoffen wie folgt gegeneinander abgegrenzt und auch im Sinne der vorliegenden Erfindung so zu verstehen. Zur Herstellung eines Vliesstoffes werden Fasern und/oder Filamente verwendet. Die lockeren oder losen und noch unverbundenen Fasern und/oder Filamente werden als Vlies oder Faservlies (Web) bezeichnet. Durch einen sogenannten Vliesbindeschritt entsteht aus einem derartigen Faservlies schließlich ein Vliesstoff, der eine ausreichende Festigkeit aufweist, um zum Beispiel zu Rollen aufgewickelt zu werden. Mit anderen Worten wird ein Vliesstoff durch die Verfestigung selbstragend ausgebildet. (Details zur Verwendung der hierin beschriebenen Definitionen und/oder Verfahren lassen sich auch im Standardwerk "Vliesstoffe", W. Albrecht, H. Fuchs, W. Kittelmann, Wiley-VCH, 2000 entnehmen.)

Das Vliesstoffmaterial kann (bevor die Falten eingebracht werden) für Staubsaugerfilterbeutel für den Haushaltsgebrauch ein Flächengewicht von unter 250 g/m², insbesondere unter 200 g/m², insbesondere zwischen 25 g/m² und 150 g/m², aufweisen.

Das Vliesstoffmaterial kann (bevor die Falten eingebracht werden) auch ein Flächengewicht von über 250 g/m² aufweisen. Insbesondere für gewerbliche Staubsaugerfilterbeutel kann dies, je nach mechanischer Anforderung, vorteilhaft sein.

Die Falten einer Beutelwand können wenigstens teilweise mittels einer Fixiervorrichtung miteinander verbunden sein. Durch die Fixiervorrichtung können auch Falten der ersten und/oder zweiten Beutelwand in einem vorherbestimmten Abstand zueinander gehalten werden.

Die Fixiervorrichtung kann wenigstens einen Materialstreifen, insbesondere einen Vliesstoffmaterialstreifen, umfassen oder aus wenigstens einem Materialstreifen, insbesondere wenigstens einem Vliesstoffmaterialstreifen, bestehen. Mehrere Materialstreifen können beabstandet zueinander angeordnet sein oder direkt aneinander angrenzen.

Mehrere Materialstreifen können quer, insbesondere senkrecht oder unter einem vorherbestimmlen Winkel, zur Längsrichtung der Falten verlaufen. Der vorherbestimmte Winkel kann größer als 0° und kleiner als 180°, insbesondere größer als 30° und kleiner als 150°, sein.

Die Fixiervorrichtung ist vorzugsweise anströmseitig in Bezug auf die Beutelwand angeordnet. Anströmseitig bedeutet hier dem Inneren des Staubsaugerfilterbeutels zugewandt. Die Fixiervorrichtung kann wenigstens teilweise mit der Beutelwand, insbesondere mit den Falten der ersten und/oder zweiten Beutelwand, verbunden, insbesondere unmittelbar verbunden, sein, insbesondere verklebt und/oder verschweißt sein. Ferner kann die Fixiervorrichtung an Stellen angeklebt und/oder angeschweißt sein, an denen Faltenschenkel zweier unterschiedlicher Falten der ersten und/oder zweiten Beutelwand aneinandergrenzen.

Die Fixiervorrichtung kann mit der Beutelwand in einem oder mehreren Bereichen der Beutelwand verklebt und/oder verschweißt sein, die jeweils zwischen zwei Falten der ersten und/oder zweiten Beutelwand angeordnet sind. Insbesondere bei liegenden Falten, die sich nicht gegenseitig überlappen, kann dadurch eine einfache Fertigung des Staubsaugerfilterbeutels erreicht werden.

Es können auch zwei oder mehr Falten der ersten und/oder zweiten Beutelwand durch die Fixiervorrichtung miteinander verbunden sein, während zwei oder mehr Falten der ersten und/oder zweiten Beutelwand nicht durch die Fixiervorrichtung miteinander verbunden sind.

Alternativ oder zusätzlich kann die Fixiervorrichtung derart mit einer oder mehreren Falten einer Beutelwand verklebt und/oder verschweißt sein, dass sich die Verbindung im Betrieb des Staubsaugerfilterbeulels löst. Damit kann durch die sich wenigstens teilweise lösende Fixiervorrichtung der Luftstrom innerhalb des Staubsaugerfilterbeutels beeinflusst werden. Mit anderen Worten können Teile der Fixiervorrichtung im Betrieb des Staubsaugerfilterbeutels als Luftverteiler dienen.

Zusätzlich oder alternaliv zu den beschriebenen Weiterbildungen kann der Staubsaugerfilterbeutel wenigstens ein Element zur Strömungsumlenkung oder Strömungsverteilung im Staubsaugerfilterbeutel umfassen, insbesondere wobei sich das Element im Luftstrom der in den Staubsaugerfilterbeutel strömenden Luft bewegen kann. Ein derartiges Element ist beispielsweise aus der EP 1 787 560 oder der EP 1 804 635 bekannt. Beispielsweise kann ein solches Element in Form von wenigstens einem, im inneren des Staubsaugerfilterbeutels, an der Beutelwand angebrachten Materialstreifen ausgebildet sein oder einen solchen Materialstreifen umfassen. Beispielsweise kann ein solches Element wenigstens einem Materialstreifen aus Vliesstoff oder Filterpapier entsprechen oder wenigstens einen Materialstreifen aus Vliesstoff oder Filterpapier umfassen. Der wenigstens eine Materialstreifen kann wenigstens teilweise geschlitzt sein.

Insbesondere kann ein solches Element in Form von wenigstens einem, im inneren des Staubsaugerfilterbeutels, an einer der Einströmöffnungdes Staubsaugerfilterbeutels gegenüberliegenden Seite der Beutelwand angebrachten Materialstreifen ausgebildet sein. Der wenigstens eine Materialstreifen kann, insbesondere unmittelbar, mit der gefalteten Beutelwand verbunden sein. Dadurch kann erreicht werden, dass sich der wenigstens eine Materialstreifen gut im Luftstrom der in den Staubsaugerfilterbeutel strömenden Luft bewegen kann, da die Luft über den Faltenkern wenigstens einer Falte unter den wenigstens einen Materialstreifen gelangen kann.

Die Fixiervorrichtung kann derart ausgebildet sein, dass die Faltenbreite und/oder der Abstand der Falten oder Faltungen, die durch die Fixiervorrichtung miteinander verbunden werden, im Betrieb des Staubsaugerfilterbeutels im Wesentlichen konstant gehalten wird. Alternativ oder zusätzlich kann die Fixiervorrichtung ein vorherbestimmtes Dehnungsverhalten aufweisen. Dadurch kann eine bessere Anpassung des Staubsaugerfilterbeutels im Betrieb an den im Staubsauger zur Verfügung stehenden Bauraum erreicht werden.

Unter einem vorherbestimmten Dehnungsverhalten wird hierbei verstanden, dass die Länge der Fixiervorrichtung in Zugrichtung einer angreifenden Kraft veränderbar, insbesondere vergrößerbar, ist.

Mit anderen Worten kann die Fixiervorrichtung derart ausgebildet sein, dass die Breite der Falten oder der Faltungen und/oder deren Abstand zueinander im Betrieb des Beutels durch eine Änderung einer Ausdehnung der Fixiervorrichtung in wenigstens einer Richtung, insbesondere in einer Richtung senkrecht zur Längsrichtung der Falten, vergrößert werden kann. Dadurch kann erreichtwerden, dass im Betrieb der Staubsaugerfilterbeutel den im Staubsauger zur Verfügung stehenden Bauraum möglichst gut ausnutzen kann.

Die Änderung der Ausdehnung kann insbesondere einer Vergrößerung der Ausdehnung oder Länge der Fixiervorrichtung entsprechen.

Die Änderung der Ausdehnung kann durch eine Dehnung des Materials der Fixiervorrichtung erreicht werden.

Alternativ oder zusätzlich kann die Änderung der Ausdehnung durch eine geometrische Verformung der Fixiervorrichtung erreicht werden. Beispielsweise kann die Fixiervorrichtung in Form eines Netzes ausgebildet sein, wobei die Form oder Geometrie der Maschen des Netzes unter Zugbelastung veränderbar ist.

Die Fixiervorrichtung kann auch gekreppt sein, wobei die Kreppung parallel zu den Falten der ersten und/oder zweiten Beutelwand verläuft. Dadurch kann im Betrieb des Staubsaugerfilterbeutels eine Änderung der Ausdehnung der Fixiervorrichtung erreicht werden.

Die Fixiervorrichtung kann auch wenigstens teilweise gefaltet sein, insbesondere wobei die Falten parallel zu den Falten der ersten und/oder zweiten Beutelwand verlaufen. Durch die Faltenhöhe der Falten der Fixiervorrichtung kann die zu erreichende Änderung der Ausdehnung der Fixiervorrichtung bestimmt werden.

Die Fixiervorrichtung kann eine Elastizität aufweisen, die derart gewählt ist, dass die Fixiervorrichtung nach dem Betrieb des Staubsaugerfilterbeutels, also nach Abschalten des

Staubsaugers, wieder in ihre ursprüngliche Form zurückkehrt. Dadurch kann die Änderung der Ausdehnung der Fixiervorrichtung reversibel gestaltet sein.

Die Fixiervorrichtung kann auch teilweise, insbesondere in Teilbereichen, durch dehnbare Materialstreifen und teilweise, insbesondere in anderen Teilbereichen, durch nicht dehnbare Materialstreifen gebildet werden. Dadurch kann der Staubsaugerfilterbeutel an den Bauraum eines Staubsaugers angepasst werden.

Das Material der Fixiervorrichtung kann eine hohe Luftdurchlässigkeit aufweisen. Wenn das Material der Fixiervorrichtung luftundurchlässig ist, kann die Fixiervorrichtung gelocht und/oder geschlitzt ausgebildet sein.

Die Fixiervorrichtung kann in Form wenigstens eines durchgehenden Klebstoffstreifens ausgebildet sein. Als Klebstoff kann insbesondere ein Schmelzklebstoff (Hotmelt) verwendet werden.

Die Fixiervorrichtung kann in Form einer durchgängigen oder unterbrochenen Schweißnaht ausgeführt werden.

Der wenigstens eine Materialstreifen kann eine Breite von 0,5 cm bis 4 cm, insbesondere von 1 cm bis 3 cm, beispielsweise 2 cm aufweisen. Der wenigstens eine Materialstreifen kann eine Dicke von 0,1 mm bis 10 mm, insbesondere von 0,3 mm bis 4 mm, aufweisen.

Die Fixiervorrichtung kann in Form von einem oder zwei Materialstreifen ausgebildet sein, deren Breite und/oder Länge der Breite und/oder Länge der Beutelwand entsprechen. Mit anderen Worten kann die Fixiervorrichtung vollflächig ausgebildet sein.

Die Fixiervorrichtung kann ein Vliesstoffmaterial, eine Folie und/oder ein Papier umfassen.

Als Vliesstoffmaterial für die Fixiervorrichtung sind beispielsweise Filamentspinnvliesstoffe, kardierte oder Airlaid Vliesstoffe und/oder Laminate aus mehreren Vliesstoffen möglich. Bei Laminaten aus mehreren Vliesstoffen können die unterschiedlichen Vliesstoffschichten einen Gradienten im Porendurchmesser aufweisen.

Die Fixiervorrichtung kann auch in Form eines Gewebes oder eines Netzes ausgebildet sein. Insbesondere kann die Fixiervorrichtung in Form eines extrudierten Netzes ausgebildet sein. Die Maschenweite des Netzes kann dabei zwischen 0,5 mm und 10 cm, insbesondere zwischen 3 mm und 6 mm, liegen. Die Form der Löcher des Netzes kann quadratisch oder rechteckig sein. Es können auch ein oder mehrere Löcher des Netzes quadratisch und ein oder mehrere Löcher des Netzes rechteckig sein.

Die Fixiervorrichtung kann auch Filamente, Taue und/oder Garne umfassen.

Die Fixiervorrichtung kann parallel zur Beutelwand, insbesondere parallel zu einer Außenfläche der Beutelwand, angeordnet sein. Als Außenfläche der Beutelwand kann hier eine Fläche verstanden werden, in der die Faltenachsen der Falten der ersten und/oder zweiten Beutelwand liegen, oder eine dazu parallele Fläche.

Die Fixiervorrichtung kann auch einer Halteplatte des Staubsaugerfilterbeutels entsprechen oder diese umfassen. Mit anderen Worten können die Falten der ersten und/oder zweiten Beutelwand wenigstens teilweise mittels der Halteplatte des Staubsaugerfilterbeutels miteinander verbunden sein.

Ein Vliesstoffmaterial der Fixiervorrichtung kann (gegebenenfalls vor einer Faltung) ein Flächengewicht von 5 g/m² bis 250 g/m² aufweisen.

Die Fixiervorrichtung kann auch als Vorfilterschicht ausgeführt sein. Mit anderen Worten kann die Fixiervorrichtung selbst als Filterschicht ausgebildet sein. In diesem Fall kann das Flächengewicht der Fixiervorrichtung kleiner als 200 g/m² sein. Beispielsweise kann die Fixiervorrichtung einem Laminat aus einem oder mehreren Filamentspinnvliesstoffen und einem oder mehreren schmelzgesponnener Mikrofaserspinnvliesstoffen entsprechen, insbesondere wobei der wenigstens eine schmelzgesponnene Mikrofaserspinnvliesstoff elektrostatisch geladene Fasern umfasst.

In einem durch die Fixiervorrichtung und den Faltenschenkeln wenigstens einer Falte des Vliesstoffmaterials gebildeten Hohlraum (Faltenkern), können Fasern und/oder Absorbentien angeordnet sein. Die Fasern können insbesondere elektrostatisch geladene Fasern sein. Dadurch kann eine weitere Filterwirkung erreicht werden. Die Fasern können beschichtet sein. Als Absorbentien können beispielsweise poröse Polymere und/oder Aktivkohle verwendet werden. Absorbentien auf Basis beschichteter Polymerfasern sind beispielsweise durch die DE 10 2004 009 956 und die EP 1 725 153 offenbart. Als poröses Polymer kann beispielsweise das vernetzte SDVB (Styroldivinylbenzol) verwendet werden. Als Absorbentien können auch imprägnierte Aktivkohle, funktionalisierter Kohlenstoff, hydrophobe Zeolithe, hydrophobe, poröse Polymere, Bentonite und/oder kristalline metallorganische Komplexe verwendet werden.

Durch eine vorherbestimmte Kombination von einem oder mehreren Bereichen des Vliesstoffmaterials, in dem die Falten nicht fixiert sind, und einem oder mehreren Bereichen des Vliesstoffmaterials, in denen die Falten fixiert sind, kann eine Anpassung an die Geometrie eines Bauraums eines Staubsaugers optimiert werden.

Zum Herstellen eines der oben beschriebenen Staubsaugerfilterbeutels kann eine Vliesstoffbahn aus schmelzgesponnenem Mikrofaserspinnvliesstoff auf einer wenigstens teilweise strukturierten Oberfläche bereits im Herstellungsprozess abgelegt werden. Dadurch kann eine Vliesstoffbahn aus einem wenigstens teilweise mit Faltungen versehenen Vliesstoffmaterial gebildet werden.

Die Beutelwand, insbesondere das gefaltete Vliesstoffmaterial und/oder die Fixiervorrichtung, kann wenigstens teilweise elektrostatisch aufgeladen sein. Es können die Fasern des Vliesstoffmaterials vor dem Verfestigen und/oder der Vliesstoff, also nach dem Verfestigen, elektrostatisch aufgeladen werden.

Die elektrostatische Ladung kann beispielsweise durch ein Koronaverfahren erreicht werden. Dabei wird das Vlies oder der Vliesstoff zentriert in einem etwa 3,8 cm (1,5 inches) bis 7,6 cm (3 inches) breitem Bereich zwischen zwei Gleichspannungselektroden für eine Koronaentladung vorbeigeführt. Dabei kann eine der Elektroden eine positive Gleichspannung von 20 bis 30 kV aufweisen während die zweite Elektrode eine negative Gleichspannung von 20 bis 30 kV aufweist.

Alternativ oder zusätzlich kann die elektrostatische Ladung gemäß der Lehre der US 5,401,446 erzeugt werden.

Der Staubsaugerfilterbeutel kann insbesondere ein Wegwerfstaubsaugerfilterbeutel sein.

Der Staubsaugerfilterbeutel kann derart ausgebildet sein, dass die Bauraumausnutzung des Staubsaugerfilterbeutels im Betrieb größer als 65%, insbesondere größer als 80%, ist.

Unter Bauraumausnutzung wird hier das Verhältnis des maximal nutzbaren Volumens des Staubraumes des Staubsaugerfilterbeutels im Betrieb zu einem theoretischen Volumen des Bauraumes des verwendeten Staubsaugers verstanden.

Die Bauraumausnutzung kann durch entsprechende Wahl von einer oder mehreren Eigenschaften des Vliesstoffmaterials und/oder einer verwendeten Fixiervorrichtung beeinflusst werden.

### Definition von Begriffen und Parametern und verwendete Messverfahren

Die oben und im Folgenden verwendeten Begriffe und Parameter werden wie nachfolgend definiert und mit nachfolgenden Verfahren gemessen.

Eine Falte im Sinn der vorliegenden Erfindung ist jeweils durch zwei Faltenschenkel und ein Faltenscharnier definiert. Die Länge des Faltenscharniers definiert in einer solchen Falte die Länge der Falte.

Eine Faltung im Sinn der vorliegenden Erfindung ist eine Abfolge von zwei oder mehreren Falten.

Eine Seitenfaltung ist eine Abfolge von Falten im Bereich der Seitenkante des Staubsaugerfilterbeutels. Der Saum entlang der betreffenden Seitenkante des Staubsaugerfilterbeutels ist hierbei ein Teil einer der die Seitenfaltung bildenden Falten; beispielsweise ist der Saum im Bereich der betreffenden Seitenkante ein Faltenscharnier oder der Saum liegt fast vollständig in einem Faltenschenkel.

Eine Oberflächenfaltung ist eine Abfolge von Faltungen, die auf der Beutelwand vorgesehen ist. Eine derartige Oberflächenfaltung wird allenfalls durch einen Teil des Saums entlang einer Seitenkante fixiert. Dieser Teil des Saums ist aber weder ein Faltenscharnier noch ein Bestandteil des Faltenschenkels einer der Falten der Faltung.

Die Luftdurchlässigkeit wird gemäß DIN EN IS09237:1995-12 bestimmt. Insbesondere wird mit einem Differenzdruck von 200 Pa und einer Prüffläche von 20 cm² gearbeitet. Für die Bestimmung der Luftdurchlässigkeit wurde das Luftdurchlässigkeitsprüfgerät FX3300 der Texttest AG verwendet.

Das Flächengewicht wird gemäß DIN EN 29073-1: 1992-08 bestimmt. Für die Bestimmung der Dicke einer oder mehrerer Vliesstoffschichten wird das Verfahren gemäß Norm DIN EN ISO 9073-2: 1997-02 eingesetzt, wobei das Verfahren A verwendet wird.

Die Penetration (NaCI-Durchlässigkeit) wird mittels einem TSI 8130 Testgeräts bestimmt. Insbesondere wird 0,3 µm Natriumchlorid bei 86 l/min verwendet.

Die Breite einer aus mehreren Falten bestehenden Oberflächenfaltung in der ersten und/oder zweiten Beutelwand ist für einen vorgegebenen Querschnitt durch die Faltung als Projektion der maximalen Ausdehnung der Oberflächenfaltung auf die Beutelwandebene definiert.

Die Höhe einer aus mehreren Falten bestehenden Oberflächenfaltung in der ersten und/oder zweiten Beutelwand ist für einen vorgegebenen Querschnitt durch die Faltung als Projektion der maximalen Ausdehnung der Oberflächenfaltung auf die Normale zur Beutelwandebene definiert.

Die maximale Höhe einer Oberflächenfaltung ist hierbei als die größte Höhe der Oberflächenfaltung entlang ihrer gesamten Länge definiert.

Die der maximalen Höhe entsprechende maximale Breite einer Oberflächenfaltung ist die größte Breite, welche die Oberflächenfaltung in der Ebene, welche die maximale Höhe enthält und die senkrecht zur Achse der Oberflächenfaltung verläuft, hat.

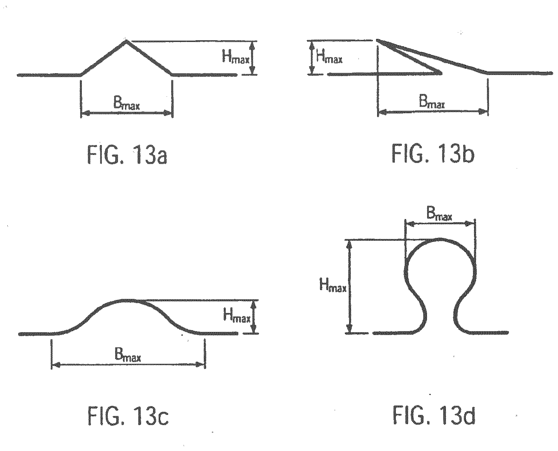

In den Figuren 13a bis 13d sind erläuternde Beispiel zur Ermittlung der maximalen Höhe und der maximalen Breite einer Oberflächenfaltung angegeben. Jeweils gezeigt ist ein Querschnitt durch eine Oberflächenfaltung in der Ebene, in der die maximale Höhe der Falte entlang ihrer Länge liegt und die senkrecht zur Faltenachse verläuft. In diesem Querschnitt sind die maximale Höhe Hₘₐₓ und die maximale Breite Bₘₐₓ eingezeichnet. In den Beispielen gemäß der Figuren 13a bis 13c sind Oberflächenfaltungen gezeigt, deren maximale Höhe kleiner als die maximalen Breite ist; in Figur 13d ist eine Oberflächenfaltung gezeigt, deren maximale Höhe größer als ihre maximale Breite ist. Die in den Figuren 13a bis 13d gezeigten Faltungen sind allesamt stehende Faltungen. Eine liegende Faltung würde man erhalten, wenn man in der Figur 13b als Höhe der Faltung Hₘₐₓ gegen Null gehen lässt.

Das maximal nutzbare Volumen des Staubraumes des Staubsaugerfilterbeutels wird gemäß der DIN EN 60312-1:2009 bestimmt. Das theoretische Volumen des Bauraumes des Staubsaugers kann aus geometrischen Daten des Bauraumes berechnet werden, insbesondere wobei der Raum zwischen im Bauraum vorhandenen Rippen, die dazu dienen den Staubsaugerfilterbeutel abzustützen und von der Wandfläche des Bauraums des Staubsaugers zu beabstanden, nicht zum theoretischen Volumen gerechnet wird.

Das theoretische Volumen des Bauraumes kann beispielsweise dadurch bestimmt werden, dass mittels eines Computers eine Fläche in ein Computermodel des Bauraums gelegt wird, die auf der inneren Wandfläche des Bauraums, insbesondere unmittelbar, aufliegt. Wenn der Bauraum Rippen aufweist, die dazu dienen den Staubsaugerfilterbeutel abzustützen und von der Wandfläche des Bauraums des Staubsaugers zu beabstanden, kann die Fläche auch einer zu der inneren Wandfläche parallelen Fläche entsprechen, die auf den oberen Kanten dieser Rippen, insbesondere unmittelbar, aufliegt. Das von dieser Fläche eingeschlossene Volumen kann dem theoretischen Volumen des Bauraumes entsprechen.

### Figurenbeschreibung

Weitere Merkmale und Vorteile der Erfindung werden nachfolgend anhand der beispielhaften Figuren erläutert. Dabei zeigt
- Figur 1: einen beispielhaften Staubsaugerfilterbeutel;
- Figur 2: eine Schrägansicht einer Innenseite eines beispielhaften Staubsaugerfilterbeutels;
- Figur 3: eine Schrägansicht einer Innenseite eines weiteren beispielhaften Staubsaugerfilterbeutels;
- Figur 4: einen Querschnitt durch einen Teilbereich eines beispielhaften Stausaugerfilterbeutels;
- Figur 5: einen Querschnitt durch einen Teilbereich eines weiteren beispielhaften Staubsaugerfilterbeutels;
- Figur 6: einen Querschnitt durch einen Teilbereich eines weiteren beispielhaften Staubsaugerfilterbeutels;
- Figur 7: einen Querschnitt durch einen Teilbereich eines weiteren beispielhaften Staubsaugerfilterbeutels;
- Figur 8: ein weiterer beispielhafter Staubsaugerfilterbeutel mit einer Seitefaltung;
- Figur 9: ein illustratives Diagramm, in dem der Volumenstrom durch die Beutelwand von beispielhaften Staubsaugerfilterbeuteln in Abhängigkeit von der darin gespeicherten Staubmasse dargestellt ist;
- Figuren 10a und 10b: einen Querschnitt durch einen Teilbereich eines beispielhaften Stausaugerfilterbeutels;
- Figuren 11 a und 11b: einen Querschnitt durch einen Teilbereich eines weiteren beispielhaften Stausaugerfilterbeutels;
- Figuren 12a bis 12c: einen Querschnitt durch Seitenfaltungen gemäß dem Stand der Technik; und
- Figuren 13a bis 13d: einen Querschnitt durch verschiedene Faltungen zur Erläuterung des Begriffs der maximalen Faltenhöhe und maximalen Faltenbreite.

### Detaillierte Beschreibung der Erfindung anhand bevorzugter Beispiele

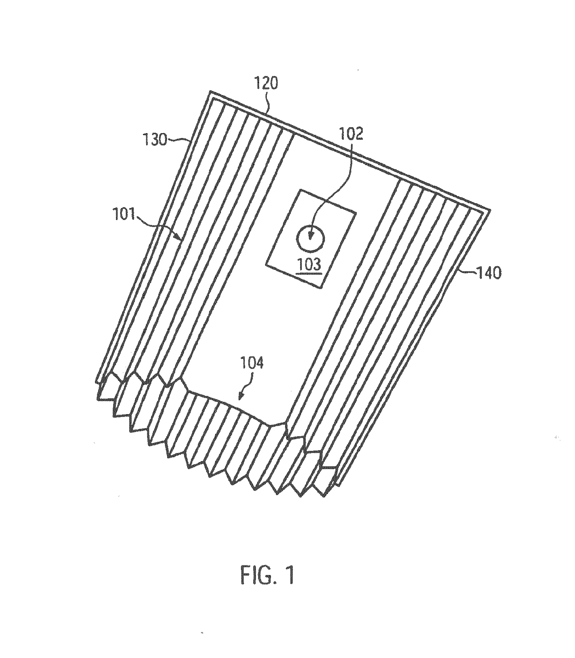

Figur 1 zeigt einen beispielhaften Staubsaugerfilterbeutel in Form eines Flachbeutels, bei dem zu Illustrationszwecken eine Seite geöffnet dargestellt ist. Tatsächlich befindet sich im Bereich der hier geöffnet dargestellten Seite eine Schweißnaht.

Der beispielhafte Staubsaugerfilterbeutel der Figur 1 umfasst eine erste und eine zweite Beutelwand aus gefaltetem Vliesstoffmaterial. Die erste und die zweite Beutelwand sind durch vier Schweißnähte miteinander verbunden. In Figur 1 sind drei dieser vier Schweißnähte 120, 130, und 140 gezeigt. Das gefaltete Vliesstoffmaterial umfasst eine Mehrzahl, insbesondere mehr als zwei, Falten 101. Die Falten 101 bilden hier stehende Faltungen.

Der beispielhafte Staubsaugerfilterbeutel der Figur 1 umfasst außerdem eine Einströmöffnung 102, durch die zu reinigende Luft in den Staubsaugerfilterbeutel einströmen kann, sowie eine Halteplatte 103, die zur Fixierung des Staubsaugerfilterbeutels in einer Kammer eines Staubsaugers dient, und im Bereich der Einströmöffnung 102 ein Durchgangsloch aufweist.

Die Falten 101 sind im beispielhaften Staubsaugerfilterbeutel der Figur 1 entlang der gesamten Länge des Staubsaugerfilterbeutels ausgebildet. Je nach Orientierung der Halteplatte 103, kann der Staubsaugerfilterbeutel eine Längsseite und eine Breitseite aufweisen. Die Falten 101 können sich entlang der Längsseite oder entlang der Breitseite erstrecken, insbesondere entlang der gesamten Längsseite oder Breitseite.

Im Fall des beispielhaften Staubsaugerfilterbeutels der Figur 1 ist ein Bereich 104 der Beutelwand frei von Falten. Alternativ können sich Falten der ersten und/oder zweiten Beutelwand jedoch auch auf der gesamten Beutelwand befinden.

Die Beutelwand kann insbesondere zwei oder mehr Filterschichten aufweisen, wobei wenigstens eine Schicht das gefaltete Vliesstoffmaterial umfasst.

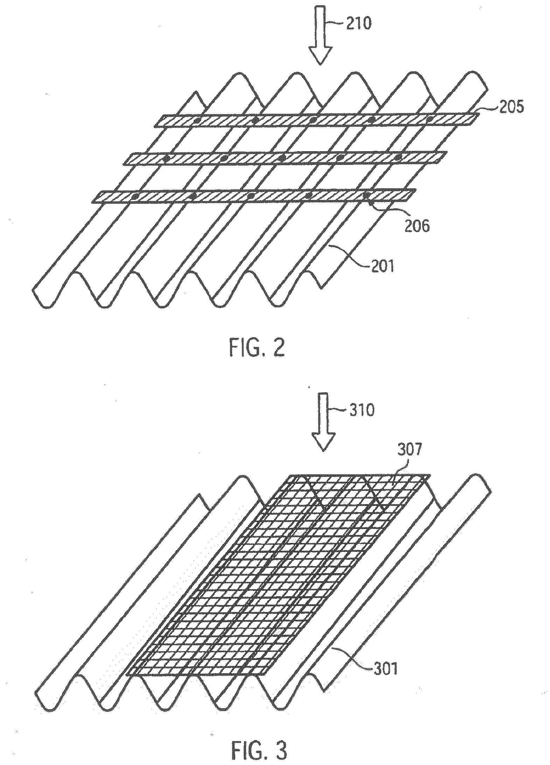

Figur 2 zeigt eine Schrägansicht einer Innenseite einer Beutelwand eines beispielhaften Staubsaugerfilterbeutels. Die Falten 201 des Vliesstoffmaterials sind in diesem Beispiel durch eine Fixiervorrichtung in Form von mehreren Materialstreifen 205 miteinander verbunden. Insbesondere werden die Falten 201 durch die Materialstreifen 205 in einem vorherbestimmten Abstand zueinander gehalten. Mit anderen Worten wird die Faltenbreite der Falten 201 durch die Materialstreifen 205 fixiert. Die Materialstreifen 205 sind an Verbindungspunkten 206 mit den Falten 201, insbesondere mit einer Kante der Falten 201, verbunden, beispielsweise verklebt oder verschweißt. Der Pfeil 210 kennzeichnet die Strömungsrichtung der zu reinigenden Luft durch das Vliesstoffmaterial.

Die Materialstreifen 205 können beispielsweise eine Breite von 0,5 cm bis 4 cm, insbesondere von 1 cm bis 3 cm, beispielsweise 2 cm aufweisen.

Die Materialstreifen 205 können ein Vliesstoffmaterial umfassen. Das Vliesstoffmaterial kann insbesondere Extrusionsvliesstoff, beispielsweise einen Filamentspinnvliesstoff, und/oder einen kardierten oder Airlaid Vliesstoff umfassen. Die Materialstreifen 205 können auch ein Laminat aus mehreren Vliesstoffen, insbesondere ein Laminat aus Filamentspinnvliesstoff - schmelzgesponnener Mikrofaserspinnvliesstoff - Filamentspinnvliesstoff umfassen.

Das Flächengewicht der Materialstreifen 205 kann kleiner als 250 g/m², insbesondere zwischen 10 g/m² und 30 g/m², sein.

Einige der Verbindungspunkte 206 können derart ausgebildet sein, dass sich die Verbindung im Betrieb des Staubsaugerfilterbeutels löst. Durch die wenigstens teilweise gelösten Materialstreifen 205 kann das Strömungsverhalten der in den Beutel einströmenden Luft beeinflusst werden.

Die Materialstreifen 205 können auch ein vorherbestimmtes Dehnungsverhalten aufweisen. Damit kann eine vorherbestimmte Ausdehnung des Beutels im Betrieb erreicht werden. Die Materialstreifen 205 können auch eine Elastizität aufweisen, so dass sich die Ausdehnung des Beutels nach dem Betrieb, also nach Ausschalten des Staubsaugers, durch elastische Rückstellkräfte wieder verringert wird. Dadurch kann auch Staub von der Beutelwand in das Innere des Staubsaugerfilterbeutels befördert werden.

Alternativ zu mehreren Materialstreifen 205 kann die Fixiervorrichtung auch als ein vollflächiger Materialstreifen ausgebildet sein. In diesem Fall kann die Fixiervorrichtung eine hohe Luftdurchlässigkeit aufweisen, insbesondere mehr als 5000 l/(m²s).

Die Fixiervorrichtung kann auch ein luftdurchlässiges Papier, Gewebe und/oder eine Folie umfassen. Um die Luftdurchlässigkeit zu erhöhen, kann die Fixiereinrichtung auch gelocht und/oder geschlitzt sein.

Figur 3 zeigt eine Schrägansicht einer Innenseite einer Beutelwand eines weiteren beispielhaften Staubsaugerfilterbeutels. In diesem Fall ist die Fixiervorrichtung in Form eines Netzes 307 ausgebildet, das in einem Teilbereich der Oberfläche die Falten 301 des Vliesstoffmaterials miteinander verbindet. In anderen Bereichen der Oberfläche sind die Falten der ersten und/oder zweiten Beutelwand nicht durch die Fixiervorrichtung verbunden. Durch eine derartige teilweise Fixierung der Falten kann eine optimale Anpassung des Staubsaugerfilterbeutels an den Bauraum des Staubsaugers im Betrieb erreicht werden. Der Pfeil 310 kennzeichnet die Strömungsrichtung der zu reinigenden Luft durch das Vliesstoffmaterial.

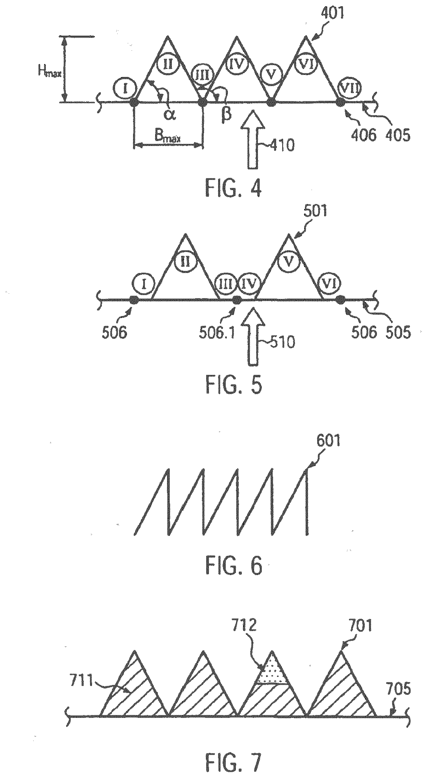

Figur 4 zeigt einen Querschnitt durch einen Teilbereich der Beutelwand eines beispielhaften Staubsaugerfilterbeutels, wobei der Querschnitt senkrecht zum Verlauf der Falten der ersten und/oder zweiten Beutelwand verläuft. Insbesondere zeigt Figur 4 eine Zick-Zack-Faltung aus drei Faltungen 401, die sieben Falten I - VII umfasst. Die Falten I, III, V und VI I sind durch eine Fixiervorrichtung 405 miteinander verbunden. Insbesondere ist die Fixiervorrichtung 405 an Verbindungspunkten 406 mit den Faltenscharnieren dieser Falten verbunden. Der Pfeil 410 bezeichnet die Anströmrichtung der zu reinigenden Luft an die Beutelwand. In diesem Beispiel ist die Fixiervorrichtung 405 also anströmseitig in Bezug auf die Beutelwand.

Figur 4 zeigt außerdem die Faltenbreite Bₘₐₓ und die Faltenhöhe Hₘₐₓ der Faltungen. Die Faltenhöhe und/oder die Faltenbreite können zwischen 3 mm und 100 mm, insbesondere zwischen 5 mm und 15 mm, liegen. Bei den Faltungen handelt es sich um stehende Faltungen; der eine Teil der Faltenschenkel hat hierbei einen Winkel α von etwa 64°, der anderen Teil der Faltenschenkel einen Winkel β von etwa 116°.

Figur 5 zeigt einen weiteren Querschnitt durch einen Teil einer Beutelwand eines beispielhaften Staubsaugerfilterbeutels. Insbesondere sind in dem Ausschnitt zwei Faltungen 501 aus sechs Falten I - VI gezeigt und eine bezüglich der Anströmrichtung 510 anströmseitig angeordnete Fixiervorrichtung 505, die an Verbindungspunkten 506 mit den Falten I, III bzw. IV und VI verbunden sind.

In Figur 5 ist der Verbindungspunkt 506.1 in dem Bereich des Vliesstoffmaterials angeordnet, der den Schenkel der Falten III und IV bildet und der parallel zur Beutelwand verläuft.

Die Faltungen dieses Staubsaugerbeutels haben demnach Schenkel, die parallel zur Beutelwand verlaufen und zwischen den Falten, die aus der Beutelwandebene herausstehen, liegen. Insbesondere ist hierbei die Breite des parallelen Schenkels geringer als die Breite der Öffnung der aus der Beutelwand herausstehenden Falte.

In den Figuren 4 und 5 weisen die Faltungen im Querschnitt die Form von gleichschenkligen Dreiecken auf. Die Höhen dieser Faltungen sind daher jeweils kleiner als die entsprechenden Breiten der Faltungen.

Figur 6 beispielsweise zeigt einen Querschnitt durch einen Teilbereich einer Beutelwand eines beispielhaften Staubsaugerfilterbeutels, bei welchem die Falten 601 im Querschnitt unterschiedlich lange Faltenschenkel aufweisen.

Insbesondere wenn zur Fixierung der Falten eine vollflächige, luftdurchlässige Fixiervorrichtung verwendet wird, können die gebildeten Hohlräume zwischen den Falten und der Fixiervorrichtung mit Fasern, insbesondere elektrostatisch geladenen Fasern, und/oder mit Absorbentien gefüllt werden. Als Absorbentien können beispielsweise beschichtete Fasern, Aktivkohle und/oder poröse Polymere verwendet werden.

So zeigt Figur 7 einen Querschnitt eines Teilbereichs einer derartigen Beutelwand. Insbesondere sind mehrere Falten 701 gezeigt, die dreieckförmige Faltungen bilden. Mit einem Teil der Falten ist eine Fixiervorrichtung 705 verbunden. In den Hohlräumen zwischen den Faltenschenkeln und der Fixiervorrichtung 705 sind Fasern 711 und/oder Aktivkohle 712 angeordnet.

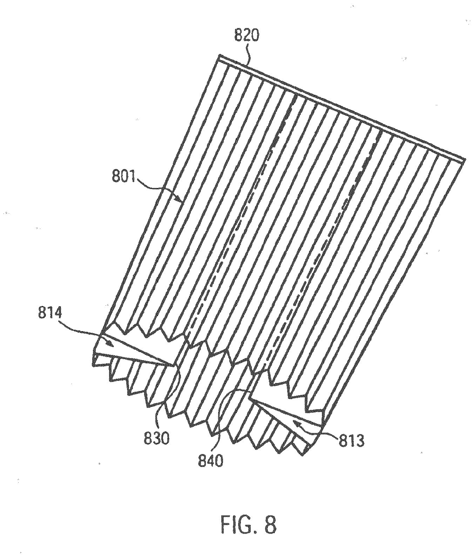

Figur 8 zeigt einen beispielhaften Staubsaugerfilterbeutel in Form eines Flachbeutels in Draufsicht auf eine Außenseite des Staubsaugerfilterbeutels. Die obere und die untere Beutelwand umfassen eine Vielzahl von Falten 801. Mit den Bezugszeichen 820, 830 und 840 sind drei Schweißnähte bezeichnet. Wie auch in Figur 1 ist in Figur 8 zu Illustrationszwecken eine Seite geöffnet dargestellt. Tatsächlich befindet sich im Bereich der hier geöffnet dargestellten Seite ebenfalls eine, nämlich die vierte Schweißnaht. Der Staubsaugerfilterbeutel umfasst außerdem zwei Seitenfaltungen 813 und 814. Im Bereich der Seitenfaltungen ist das Filtermaterial nicht gefaltet. Die Seitenfalten 813 und 814 sind teilweise oder vollständig ausstülpbar.

Entsprechend einer nicht gezeigten Ausführung können auch die Seitenfaltungen gefaltetes Filtermaterial ausweisen. Damit sich das gefaltete Filtermaterial beim Einbringen der Seitenfaltungen nicht entfaltet ist es zweckmäßig, die Seitenfaltungen unter einem Winkel zu den Falten vorzusehen, der größer als 45° ist. Geht man von dem in Figur 8 gezeigten Staubsaugerfilterbeutel aus, wäre in diesem Fall die Seitenfaltung im Bereich der Schweißnaht 820 und/oder im Bereich der nicht dargestellten Schweißnaht einzubringen.

In den Figuren 1 und 4 bis 8 weisen die Falten die Form eines Dreiecks auf. Die Falten können jedoch auch eine beliebige andere Form aufweisen. Insbesondere ist die Form der Falten in den Figuren nur schematisch zu verstehen. Insbesondere können auch die Faltenschenkel gekrümmt sein.

Die Faltenform einer oder mehrerer Falten und/oder Faltungen der ersten und/oder zweiten Beutelwand kann in einem Querschnitt senkrecht zur Längsachse der Falten eine Schwalbenschwanzform aufweisen. Beispiele für Faltungen mit einem Querschnitt in Schwalbenschwanzform sind in den Figuren 10a und 10b dargestellt. Die zum Beutelinneren hin weisenden Kanten 1015 der Faltenschenkel der Falten 1001 sind dabei beabstandet zueinander angeordnet. Dadurch kann die zu reinigende Luft einfach in die Faltung eindringen. Die Richtung, in der die zu reinigende Luft durch die Beutelwand strömt, ist durch einen Pfeil 1010 illustriert.

In Figur 10a sind die Falten 1002 des Vliesstoffmaterials jeweils mit den parallelen Schenkeln der Falten 1001 verbunden, insbesondere verklebt und/oder verschweißt. Die Verbindungsstellen 1016 haben dabei in Längsrichtung der Falten 1002 einen Abstand zueinander, der größer ist als 1/5, insbesondere größer als 1/4, der Länge der Falte 1002. Dadurch können die Falten 1002 im Betrieb besser durch die zu reinigende Luft durchströmt werden, als bei geringeren Abständen zwischen den Verbindungsstellen 1016.

Gemäß einer nicht dargestellten Ausführung können die Verbindungsstellen 1016 auch auf einer durchlaufenden Schweißlinie liegen.

In Figur 10b ist eine Fixiervorrichtung 1105 in Form mehrerer Materialstreifen vorgesehen, die mit dem wenigstens gefalteten Vliesstoffmaterial mit den Faltenschenkeln der Falten 1001 verklebt und/oder verschweißt ist. Dabei sind in Figur 10b mehrere Verbindungspunkte 1006 gezeigt.

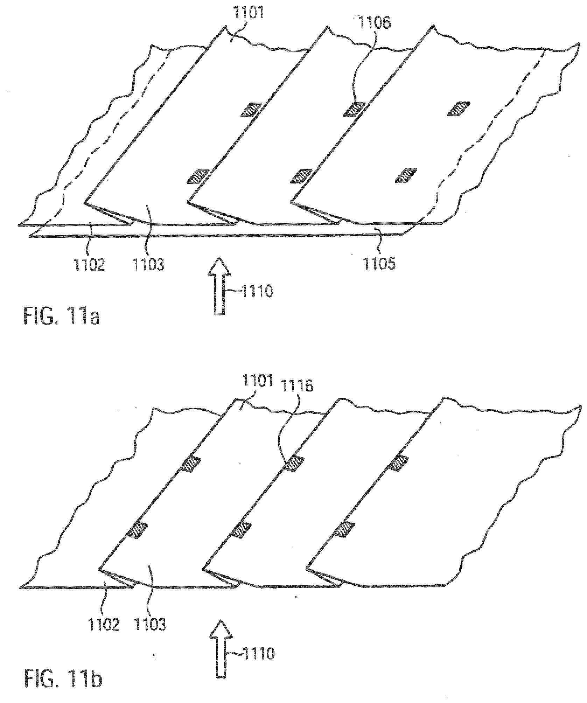

In Figuren 11a und 11b sind weitere beispielhafte Ausschnitte einer Beutelwand mit einem Vliesstoffmaterial mit Oberflächenfaltungen gezeigt. Die Faltungen aus den Falten 1101, 1102 und 1103 des Vliesstoffmaterials sind in diesen Beispielen liegend ausgebildet, d.h. die Faltenschenkel verlaufen im Wesentlichen parallel zur Oberfläche der Beutelwand. Da im Wesentlichen parallel zur Oberfläche verlaufende Faltenschenkel zeichnerisch nicht darstellbar sind, wurden die Faltenschenkel hier unter einem Winkel in Bezug auf die Oberfläche der Beutelwand dargestellt.

In Figur 11a ist außerdem eine Fixiervorrichtung 1105 gezeigt, die mit dem mit Oberflächenfaltungen versehenen Vliesstoffmaterial in Bereichen der Beutelwand verbunden, insbesondere verklebt und/oder verschweißt, ist, welche die Faltenschenkel der Falten 1101 bilden. Durch diese Art der Verbindung der Fixiervorrichtung kann die Fertigung des Staubsaugerfilterbeutels vereinfacht werden. Insbesondere sind mehrere Verbindungspunkte 1106 zwischen der Fixiervorrichtung und der Beutelwand gezeigt.

In Figuren 11a und 11b ist außerdem die Richtung, in der die zu reinigende Luft die Beutelwand durchströmt, in Form eines Pfeils 1110 illustriert.

Die Fixiervorrichtung 1105 ist in Figur 11a vollflächig ausgebildet. Die Fixiervorrichtung 1105 könnte jedoch auch in Form von mehreren Materialstreifen, wie beispielsweise in Figur 2 illustriert, ausgebildet sein.

Gemäß einer nicht dargestellten Ausführung können die Verbindungsstellen 1106 auch auf einer durchlaufenden Schweißlinie, die vorzugsweise parallel zu den Faltenachsen verläuft, liegen.

In Figur 11b sind die Faltungen 1101 des Vliesstoffmaterials jeweils mit den Faltenschenkeln der Falten 1102 verbunden, insbesondere verklebt und/oder verschweißt, der zwischen zwei Faltenkanten der Beutelwand angeordnet ist. Die Verbindungsstellen 1116 haben dabei in Längsrichtung der Falten 1101 einen Abstand zueinander, der größer ist als 1/5, insbesondere größer als 1/4, der Länge der Falte 1101. Dadurch können die Falten 1101 im Betrieb besser durch die zu reinigende Luft durchströmt werden, als bei geringeren Abständen zwischen den Verbindungsstellen 1116.

Gemäß einer nicht dargestellten Ausführung können die Verbindungsstellen 1116 auch auf einer durchlaufenden Schweißlinie, die vorzugsweise senkrecht zu den Faltenachsen verläuft, liegen.

Durch Verwendung eines Vliesstoffmaterials mit Oberflächenfaltungen lässt sich die zur Filtration verfügbare Fläche bei vorgegebenen Abmessungen des Staubsaugerfilterbeutels vergrößern. Dies führt zu einer hohen Abscheideleistung bei geringem Anfangsdruckverlust. Damit einher geht eine niedrigere Mediendurchtrittsgeschwindigkeit, was die Abscheideleistung, insbesondere durch elektrostatisch geladene Fasern der Beutelwand, erhöht.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Insbesondere kann der Staubsaugerfilterbeutel in unterschiedlichen Geometrien und/oder Größen ausgebildet.

### Messergebnisse

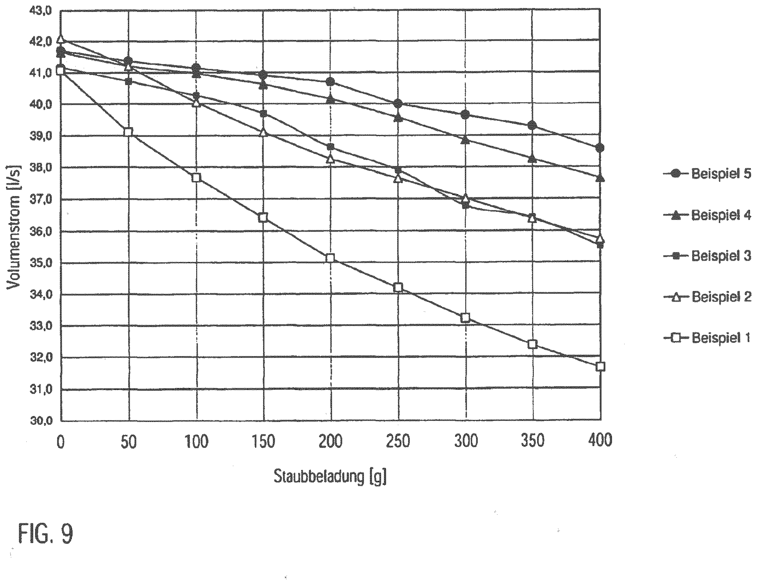

Figur 9 dient der Illustration und zeigt ein Diagramm, in dem der Volumenstrom durch den Staubsauger in Abhängigkeit von der Staubbeladung (DMT-8 Staub) in Gramm dargestellt ist. Die Beutelwand ist ein SMMS-Laminat, besteht also jeweils aus einer Außenlage aus Spinnvlies (35 g/m²) zwei Lagen aus Meltblownvliesstoff (2 x 20 g/m²) und einer Innenlage aus Spinnvlies (17 g/m²). Die entsprechenden Messungen wurden mit einem Staubsauger des Modells "Miele S 5210" durchgeführt.
**Beispiel 1:** Flachbeutel nach dem Stand der Technik. Beutelmaße: 300 mm x 320 mm.
**Beispiel 2:** Beutelmaße (Länge x Breite): 300 mm x 320 mm. Auf der Beuteloberseite und der Beutelunterseite waren jeweils durchlaufende, gleichmäßig über die Oberfläche verteilte Längsfalten vorhanden. Insbesondere waren die Längsfalten auf jeder der Beutelseiten in Form einer Zick-Zack-Faltung, wie sie in Figur 4 gezeigt ist (eine Fixiervorrichtung, wie sie in Figur 4 gezeigt ist, wurde in diesem Beispiel 2 jedoch noch nicht eingesetzt), vorgesehen. Die Zick-Zack-Faltung hatte zur Staubsaugerbeutelinnenseite hin 20 offene Falten. Die Materialbreite betrug 630 mm. Die durchschnittliche Höhe Hₘₐₓ der Faltung betrug 12 mm.
**Beispiel 3:** Beutelmaße (Länge x Breite): 300 mm x 320 mm. Auf der Beuteloberseite und der Beutelunterseite war dieselbe Faltung wie in Beispiel 2 vorgesehen. Zusätzlich war bei diesem Beutel auf der Innenseite der Beuteloberseite und der Beutelunterseite eine vollflächige Fixiervorrichtung in Form eines Netzes mit einer Maschenweite von 5 mm x 5 mm vorhanden. Dieses Netz war an 171 Punkten entsprechend Fig. 3 am Filtermedium befestigt.
**Beispiel 4:** Beutelmaße (Länge x Breite): 300 mm x 320 mm. Auf der Beuteloberseite und der Beutelunterseite war dieselbe Faltung wie in Beispiel 2 vorgesehen. Zusätzlich war bei diesem Beutel auf der Innenseite der Beuteloberseite und der Beutelunterseite eine Fixiervorrichtung in Form von neun Streifen von 20 mm Breite vorhanden. Diese Streifen waren an 171 Punkten entsprechend Fig. 2 am Filtermedium befestigt.
**Beispiel 5:** Beutelmaße (Länge x Breite): 300 mm x 320 mm. Auf der Beuteloberseite und der Beutelunterseite war dieselbe Faltung wie in Beispiel 2 vorgesehen. Zusätzlich war bei diesem Beutel auf der Innenseite der Beuteloberseite und der Beutelunterseite eine Fixiervorrichtung in Form von neun Streifen von 20 mm Breite vorhanden. Diese Streifen waren an 171 Punkten entsprechend Fig. 2 am Filtermedium befestigt. Im Beutel war zusätzlich noch ein Element zur Strömungsumlenkung vorhanden. Dieses bestand aus 14 Streifen von je 11 mm mit einem Flächengewicht von 110 g/m². Die Streifen liefen parallel zu den Falten der Beutelober- und Beutelunterseite.

Wie in Figur 9 ersichtlich, zeigen die Staubsaugerfilterbeutel mit einer Beutelwand umfassend ein gefaltetes Vliesstoffmaterial auch bei hohen Staubbeladungen einen größeren Volumenstrom auf, als ein Staubsaugerfilterbeutel mit einer Beutelwand ohne Faltungen in dem Vliesstoffmaterial.

Anders gesagt wird durch die höhere Staubspeicherfähigkeit der Druckverlustanstieg des Staubsaugerfilterbeutels reduziert.

In Tabelle 1 sind Mittelwerte (aus jeweils 5 Messungen) des gemessenen Druckverlusts und der gemessenen Penetration für 2 verschiedene Filtermedien in Abhängigkeit von der Mediendurchtrittsgeschwindigkeit dargestellt. Die hohe Mediendurchtrittsgeschwindigkeit entspricht hierbei einem nicht gefalteten Material; die niedrige Durchtrittsgeschwindigkeit einem gefalteten Material. Filtermedium 1 ist ein SMMS-Laminat aus einer Außenlage aus Spinnvlies (35 g/m²) zwei Lagen aus Meltblownvliesstoff (2 x 20 g/m²) und einer Innenlage aus Spinnvlies (17 g/m²). Filtermedium 2 ist ein SMMMMS-Laminat aus einer Außenlage aus Spinnvlies (35 g/m²) vier Lagen aus Meltblownvliesstoff (4 x 19 g/m²) und einer innenlage aus Spinnvlies (17 g/m²).

**Tabelle 1: Die unterschiedlichen Mediendurchtrittsgeschwindigkeiten wurden durch Änderung der Volumenstroms am TSI 8130 eingestellt. Es wurde mit Prüflingen mit einer Fläche von 100 cm² gearbeitet.**

| TSI 8130 | Mediendurchtrittsgeschwindigkeit [cm/s] | Druckverlust ΔP [mm H₂O] | Penetration [%] |
|---|---|---|---|
| Filtermedium 1 | 14,3 | 14,5 | 32,2 |
| | 7,15 | 6,9 | 18,7 |
| Filtermedium 2 | 14,3 | 32,1 | 0,025 |
| | 7,15 | 15,5 | 0,004 |

Wie aus Tabelle 1 ersichtlich, sind der Druckverlust und die Penetration bei dem Filtermedium und der Strömungsgeschwindigkeit, die einer mit Falten versehenen Beutelwand entsprechen, deutlich geringer als bei dem Filtermedium und der Strömungsgeschwindigkeit, die dem Stand der Technik (ungefaltet) entsprechen. Bei der geringeren Mediendurchtrittsgeschwindigkeit ist bei beiden betrachteten Filtermedien der Druckverlust nur etwa halb so hoch wie bei der hohen Mediendurchtrittsgeschwindigkeit.

Bei beiden Filtermaterialien verbessert sich erwartungsgemäß die Abscheideleistung bei der geringeren Mediendurchtrittsgeschwindigkeit deutlich. Die Verringerung der Penetration ist bei dem Filtermedium 2 überproportional stärker als bei Filtermedium 1, weil in diesem Fall der Effekt der elektrostatischen Ladung des Filtermaterials noch stärker zum Tragen kommt als bei dem offeneren Material 1.

Durch eine Beutelwand mit Oberflächenfaltungen kann eine optimale Anpassung des Staubsaugerfilterbeutels im Betrieb an den vorgegebenen Bauraum im Staubsauger erreicht werden. Insbesondere kann eine Bauraumausnutzung von mehr als 65% erreicht werden. Insbesondere wenn keine Fixiervorrichtung für die Falten der ersten und/oder zweiten Beutelwand vorgesehen ist, kann eine Bauraumausnutzung von mehr als 80% erreicht werden.

Mit Flachbeuteln wie sie im Stand der Technik bekannt sind, kann üblicherweise nur eine Bauraumausnutzung von 50% bis 65% erreicht werden.

## Patentansprüche

1. Staubsaugerfilterbeutel mit einer ersten ein Filtermaterial umfassenden Beutelwand und einer zweiten ein Filtermaterial umfassenden Beutelwand, wobei die erste und die zweite Beutelwand entlang ihres Umfangs derart miteinander verbunden sind (120, 130, 140; 820, 830; 840), dass der Staubsaugerfilterbeutel vollständig geschlossen ist, wobei das Filtermaterial der ersten und der zweiten Beutelwand aus Vliesstoff gebildet ist, wobei der Staubsaugerfilterbeutel eine Eintrittsöffnung (102), durch die zu reinigende Luft in den Staubsaugerfilterbeutel einströmen kann, und eine Halteplatte (103) aufweist,
wobei die erste und/oder die zweite Beutelwand wenigstens fünf Falten (101; 801) aufweist, und
wobei eine Fixiervorrichtung (205; 307) vorgesehen ist, die verhindert, dass sich wenigstens eine der wenigstens fünf Falten vollständig entfaltet.

2. Staubsaugerbeutel nach Anspruch 1, wobei die Faltenschenkel der wenigstens fünf Falten Inflexionslinien aufweisen, die im Wesentlichen gerade verlaufen.

3. Staubsaugerfilterbeutel nach Anspruch 1 oder 2, wobei die wenigstens fünf Falten wenigstens eine Oberflächenfaltung bilden, wobei die maximale Höhe (Hₘₐₓ) der Oberflächenfaltung vor der ersten Inbetriebnahme des Staubsaugerfilterbeutels in einem Staubsauger kleiner ist als die der maximalen Höhe entsprechende maximale Breite (Bₘₐₓ) der Oberflächenfaltung.

4. Staubsaugerfilterbeutel nach einem der vorangegangenen Ansprüche, wobei vor der ersten Inbetriebnahme des Staubsaugerfilterbeutels in einem Staubsauger jede der wenigstens fünf Falten (101; 801) eine Länge hat, die größer als ein Drittel der Gesamtausdehnung des Staubsaugerfilterbeutels in Richtung der Falte ist, vorzugsweise größer als die Hälfte der Gesamtausdehnung des Staubsaugerfilterbeutels in Richtung der Falte ist und höchstvorzugsweise der Gesamtausdehnung des Beutels in Richtung der Falte entspricht.

5. Staubsaugerfilterbeutel nach einem der vorangegangenen Ansprüche, wobei vor der ersten Inbetriebnahme des Staubsaugerfilterbeutels in einem Staubsauger jede der wenigstens fünf Falten eine Höhe zwischen 3 mm und 100 mm, insbesondere zwischen 3 mm und 50 mm, insbesondere zwischen 5 mm und 15 mm, aufweist.

6. Staubsaugerfilterbeutel nach einem der vorangegangenen Ansprüche, wobei vor der ersten Inbetriebnahme des Staubsaugerfilterbeutels in einem Staubsauger jede der wenigstens fünf Falten eine Breite zwischen 3 mm und 100 mm, insbesondere zwischen 3 mm und 50 mm, insbesondere zwischen 5 mm und 15 mm, aufweist.

7. Staubsaugerfilterbeutel nach einem der vorangegangenen Ansprüche, wobei wenigstens zwei der wenigstens fünf Falten voneinander unterschiedliche Höhen und/oder Breiten und/oder Formen aufweisen.

8. Staubsaugerbeute) nach einem der vorangegangenen Ansprüche, wobei eine Mehrzahl von Falten (101; 801) vorgesehen ist, die über die erste und/oder zweite Beutelwand, vorzugsweise im Wesentlichen gleichmäßig, verteilt sind.

9. Staubsaugerfilterbeutel nach einem der vorangegangenen Ansprüche, außerdem umfassend wenigstens eine Seitenfaltung (813, 814).

10. Staubsaugerfilterbeutel nach Anspruch 9, wobei die wenigstens eine Seitenfaltung ihrerseits wenigstens eine Falte aufweist, die vorzugsweise in einem Winkel größer als 45°, höchst vorzugsweise in einem im Wesentlichen rechten Winkel, zur Seitenfaltung verläuft.

11. Staubsaugerfilterbeutel nach Anspruch 1, wobei die Fixiervorrichtung anströmseitig in Bezug auf die erste und/oder zweite Beutelwand angeordnet ist.

12. Staubsaugerfilterbeutel nach Anspruch 1 oder 11, wobei die Fixiervorrichtung mit der wenigstens einen Falte und/oder mit zu der wenigstens einen Falte benachbarten Beutelwand verklebt und/oder verschweißt ist.

13. Staubsaugerfilterbeutel nach einem der Ansprüche 1, 11 oder 12, wobei die Fixiervorrichtung wenigstens einen Materialstreifen (205), Insbesondere einen Vliesstoffmaterialstreifen, umfasst und/oder wobei die Fixiervorrichtung ein vorgegebenes Dehnungsverhalten und/oder vorgegebenes elastisches Verhalten aufweist.

14. Staubsaugerfilterbeutel nach einem der Ansprüche 1, 11, 12 oder 13, wobei die Fixiervorrichtung eine Vliesstoffmateriallage, eine Netzlage (307), eine gelochte Folie oder eine Gewebelage ist, die sich über die gesamte erste und/oder zweite Beutelwand erstreckt.

15. Staubsaugerfilterbeutel nach einem der Ansprüche 1, 11, 12, 13 oder 14, wobei in einem Hohlraum, der durch die Fixiervorrichtung und die Faltenschenkel der wenigstens einen Falte gebildet ist, Fasern und/oder Absorbentien vorgesehen sind.

16. Staubsaugergerät mit einem Staubsaugerfilterbeutel nach einem der vorangegangenen Patentansprüche, wobei Staubsaugergerät und Staubsaugerfilterbeutel so ausgebildet sind, dass die Bauraumausnutzung des Staubsaugerfilterbeutels im Betrieb in dem Staubsaugergerät größer als 65%, insbesondere größer als 80%, ist.

## Claims

1. A vacuum cleaner filter bag with a first bag wall comprising a filter material and a second bag wall comprising a filter material, wherein the first and the second bag wall are connected to each other along their periphery (120, 130, 140 ; 820, 830; 840) such that the vacuum cleaner filter bag is completely closed, wherein the filter material of the first and of the second bag wall is formed from a nonwoven, wherein the vacuum cleaner filter bag has an inlet opening, through which the air to be cleaned can flow into the vacuum cleaner filter bag, the inlet opening (102) is positioned on a surface of the first or the second bag wall, and a retaining plate (103), and
wherein the first and/or the second bag wall has at least five folds (101 ; 801); and
further comprising a fixing device (205 ; 307) that prevents at least one of the at least five folds from unfolding completely.

2. The vacuum cleaner bag according to claim 1, wherein fold legs of the at least five folds have inflection lines that run essentially straight.

3. The vacuum cleaner filter bag according to claim 1, wherein the at least five folds form at least one surface folding, wherein a maximum height (Hₘₐₓ) of the surface folding before a first operation of the vacuum cleaner filter bag in a vacuum cleaner is less than a maximum width (Bₘₐₓ) of the surface folding corresponding to the maximum height.

4. The vacuum cleaner filter bag according to claim 1, wherein before a first operation of the vacuum cleaner filter bag in a vacuum cleaner, each of the at least five folds (101 ; 801) has a length that is greater than one-third of a total extension of the vacuum cleaner filter bag in a direction of the fold, preferably, greater than half of a total extension of the vacuum cleaner filter bag in a direction of the fold and, most preferably, a length that corresponds to the total extension of the vacuum cleaner filter bag in a direction of the fold.

5. The vacuum cleaner filter bag according to claim 1, wherein before a first operation of the vacuum cleaner filter bag in a vacuum cleaner, each of the at least five folds has a height between 3 mm and 100 mm, in particular, between 3 mm and 50 mm, in particular, between 5 mm and 15 mm.

6. The vacuum cleaner filter bag according to claim 1, wherein before a first operation of the vacuum cleaner filter bag in a vacuum cleaner, each of the at least five folds has a width between 3 mm and 100 mm, in particular, between 3 mm and 50 mm, in particular, between 5 mm and 15 mm.

7. The vacuum cleaner filter bag according to claim 1, wherein at least two of the at least five folds have heights and/or widths and/or shapes that differ from one another.

8. The vacuum cleaner bag according to claim 1, wherein a plurality of folds (101 ; 801) are provided that are distributed, preferably, essentially uniformly, across the first and/or the second bag wall.

9. The vacuum cleaner filter bag according to claim 1, furthermore comprising at least one side folding (813, 814).

10. The vacuum cleaner filter bag according to claim 9, wherein the at least one side folding itself has at least one fold that, preferably, runs at an angle greater than 45°, most preferably, in essentially a right angle, to the side folding.

11. The vacuum cleaner filter bag according to claim 1, wherein the fixing device is arranged on the upstream side with reference to the first and/or the second bag wall.

12. The vacuum cleaner filter bag according to claim 1 or 11, wherein the fixing device is glued and/or welded to the at least one fold and/or to the bag wall adjacent to the at least one fold.

13. The vacuum cleaner filter bag according to claim 1, 11 or 12, wherein the fixing device comprises at least one material strip (205), in particular, a nonwoven material strip, and/or wherein the fixing device has a predetermined expansion behaviour and/or a predetermined elastic behaviour.

14. The vacuum cleaner filter bag according to claim 1, 11, 12 or 13, wherein the fixing device is a nonwoven material layer, a net layer (307), a perforated foil or a fabric ply that extends across the entire first and/or second bag wall.

15. The vacuum cleaner filter bag according to claim 11, 12, 13 or 14, wherein fibres and/or absorbents are provided in a hollow space that is formed by the fixing device and fold legs of the at least one fold.

16. Vacuum cleaner device comprising a vacuum cleaner filter bag according to one of the preceding claims, wherein the vacuum cleaner device and the vacuum cleaner filter bag are configured such that an installation space utilization of the vacuum cleaner filter bag in the vacuum cleaner device during operation is greater than 65 %, in particular, greater than 80 %.

## Revendications

1. Sac filtrant d'aspirateur avec une première paroi de sac comportant un matériau filtrant et une deuxième paroi de sac comportant un matériau filtrant, dans lequel les première et deuxième parois de sac sont connectées entre elles le long de leur pourtour (120, 130, 140 ; 820, 830; 840) de telle manière que le sac filtrant d'aspirateur est entièrement fermé, dans lequel le matériau filtrant des première et deuxième parois de sac est constitué d'un matériau non-tissé, dans lequel le sac filtrant d'aspirateur comporte un orifice d'entrée (102), à travers lequel de l'air à nettoyer peut entrer dans le sac filtrant d'aspirateur, ainsi qu'une plaque de rétention (103),
dans lequel les première et/ou deuxième parois de sac comportent au moins cinq plis (101 ; 801) et
dans lequel un dispositif de fixation (205; 307) est pourvu pour empêcher qu'au moins un desdits au moins cinq plis ne se déplie entièrement.

2. Sac d'aspirateur selon la revendication 1, dans lequel les jambes de pli desdits au moins cinq plis comportent des lignes d'inflexion qui sont essentiellement rectilignes.

3. Sac filtrant d'aspirateur selon la revendication 1 ou 2, dans lequel lesdits au moins cinq plis constituent au moins un pliage de surface, dans lequel la hauteur maximale du pliage de surface (Hₘₐₓ) avant la première mise en service du sac filtrant d'aspirateur dans un aspirateur est inférieure à la largeur maximale du pliage de surface (Bₘₐₓ) correspondant à ladite hauteur maximale.

4. Sac filtrant d'aspirateur selon l'une des revendications précédentes, dans lequel, avant la première mise en service du sac filtrant d'aspirateur dans un aspirateur, chacun desdits au moins cinq plis (101 ; 801) présente une longueur qui est supérieure à un tiers de l'extension totale du sac filtrant d'aspirateur en direction du pli, qui est préférablement supérieure à la moitié de l'extension totale du sac filtrant d'aspirateur en direction du pli, et qui correspond préférablement encore à l'extension totale du sac en direction du pli.

5. Sac filtrant d'aspirateur selon l'une des revendications précédentes, dans lequel, avant la première mise en service du sac filtrant d'aspirateur dans un aspirateur, chacun desdits au moins cinq plis présente une hauteur comprise entre 3 mm et 100 mm, en particulier entre 3 mm et 50 mm, et plus en particulier encore entre 5 mm et 15 mm.

6. Sac filtrant d'aspirateur selon l'une des revendications précédentes, dans lequel, avant la première mise en service du sac filtrant d'aspirateur dans un aspirateur, chacun desdits au moins cinq plis présente une largeur comprise entre 3 mm et 100 mm, en particulier entre 3 mm et 50 mm, et plus en particulier encore entre 5 mm et 15 mm.

7. Sac filtrant d'aspirateur selon l'une des revendications précédentes, dans lequel au moins deux desdits au moins cinq plis présentent des hauteurs et/ou des largeurs et/ou des formes qui diffèrent entre elles.

8. Sac d'aspirateur selon l'une des revendications précédentes, dans lequel est pourvue une pluralité de plis (101 ; 801) qui sont distribués sur les première et/ou deuxième parois de sac, de préférence de manière essentiellement uniforme.

9. Sac filtrant d'aspirateur selon l'une des revendications précédentes, comportant en outre au moins un pliage latéral (813, 814).

10. Sac filtrant d'aspirateur selon la revendication 9, dans lequel ledit au moins un pliage latéral comporte pour sa part au moins un pli qui s'étend préférablement à un angle supérieur à 45° par rapport au pliage latéral, et préférablement encore à un angle essentiellement droit par rapport au pliage latéral.

11. Sac filtrant d'aspirateur selon la revendication 1, dans lequel le dispositif de fixation est agencé du côté amont par rapport auxdites première et/ou deuxième parois de sac.

12. Sac filtrant d'aspirateur selon la revendication 1 ou 11, dans lequel le dispositif de fixation est collé et/ou soudé audit au moins un pli et/ou à une paroi de sac adjacente audit au moins un pli.

13. Sac filtrant d'aspirateur selon l'une des revendications 1, 11 ou 12, dans lequel le dispositif de fixation comporte au moins une bande de matériau (205), en particulier une bande de matériau non tissé, et/ou dans lequel le dispositif de fixation présente un rapport d'extension prédéterminé et/ou un rapport élastique prédéterminé.

14. Sac filtrant d'aspirateur selon l'une des revendications 1, 11, 12 ou 13, dans lequel le dispositif de fixation est une couche de matériau non tissé, une couche en treillis (307), un film perforé ou une couche de tissu, qui s'étend sur l'ensemble des première et/ou deuxième parois du sac.

15. Sac filtrant d'aspirateur selon l'une des revendications 1, 11, 12, 13 ou 14, dans lequel des fibres et/ou des matières absorbantes sont pourvues dans une cavité qui est constituée par le dispositif de fixation et les jambes de pli dudit au moins un pli.

16. Appareil aspirateur avec un sac filtrant d'aspirateur selon l'une des revendications précédentes, dans lequel l'appareil aspirateur et le sac filtrant d'aspirateur sont constitués de telle manière que l'utilisation de l'espace d'installation du sac filtrant d'aspirateur lors du fonctionnement de l'appareil aspirateur est supérieure à 65 %, et en particulier supérieure à 80 %.
